(19) Europäisches Patentamt
European Patent Office
Office européen des brevets

(11) **EP 2 834 276 B1**

(12) **EUROPÄISCHE PATENTSCHRIFT**

(45) Veröffentlichungstag und Bekanntmachung des Hinweises auf die Patenterteilung:
**17.02.2016   Patentblatt 2016/07**

(21) Anmeldenummer: **13717204.5**

(22) Anmeldetag: **02.04.2013**

(51) Int Cl.:
*C08F 2/20* (2006.01)      *C08F 2/22* (2006.01)

(86) Internationale Anmeldenummer:
**PCT/EP2013/056892**

(87) Internationale Veröffentlichungsnummer:
**WO 2013/150001 (10.10.2013 Gazette 2013/41)**

(54) **VERFAHREN ZUR HERSTELLUNG VON VINYLESTERPOLYMEREN MIT GEZIELT EINSTELLBARER DISPERSITÄT BEI GERINGER POLYDISPERSITÄT**

METHOD FOR PRODUCING VINYL ESTER POLYMERS HAVING SPECIFICALLY SETTABLE DISPERSITY AND LOW POLYDISPERSITY

PROCÉDÉS DE PRODUCTION DE POLYMÈRES D'ESTERS DE VINYLE AYANT UNE DISPERSITÉ AJUSTABLE DE MANIÈRE CIBLÉE EN MÊME TEMPS QU'UNE FAIBLE POLYDISPERSITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2012   DE 102012205455**

(43) Veröffentlichungstag der Anmeldung:
**11.02.2015   Patentblatt 2015/07**

(73) Patentinhaber: **Wacker Chemie AG**
**81737 München (DE)**

(72) Erfinder:
• **ZECHA, Helmut**
**84489 Burghausen (DE)**
• **WEITZEL, Hans-Peter**
**84571 Reischach (DE)**

(74) Vertreter: **Ege, Markus et al**
**Wacker Chemie AG**
**Hanns-Seidel-Platz 4**
**81737 München (DE)**

(56) Entgegenhaltungen:
EP-A1- 0 899 281          EP-A1- 1 788 001
WO-A1-2004/065437          DE-A1-102006 037 317
DE-A1-102007 021 776          DE-A1-102009 008 143
DE-B- 1 029 565

## Beschreibung

Die vorliegende Erfindung betrifft Verfahren zur Herstellung von Schutzkolloid-stabilisierten wässrigen Dispersionen von Vinylesterpolymeren mit bestimmten gewichtsmittleren Teilchendurchmessern und geringer Polydispersität, die so erhaltenen Verfahrensprodukte sowie Verwendungen der Verfahrensprodukte, beispielsweise als Bindemittel.

Verfahren zur Herstellung von Vinylesterpolymeren in Form von wässrigen Dispersionen durch radikalisch initiierte Emulsionspolymerisationen sind lange bekannt. Solche Polymerdispersionen finden unterschiedlichste Anwendungen, wie beispielsweise in Bindemitteln für Klebstoffe, zur Faserbindung von nichtgewebten Vliesstoffen, zur Imprägnierung oder Beschichtung textiler Flächengebilde, in wässrigen Dispersionsfarben, oder nach Sprühtrocknung als in Wasser redispergierbare Polymerpulver, beispielsweise als Bindemittel in zementären oder nicht-zementären Anwendungen in der Bauindustrie.

Die Anwendungseigenschaften wässriger Dispersionen von Vinylesterpolymeren werden von der Polymerzusammensetzung, von Art und Anteilen an Hilfsstoffen, wie beispielsweise an Schutzkolloiden, Emulgatoren, und Initiatoren, und in entscheidendem Ausmaße auch durch die Größe bzw. die Größenverteilung der Vinylesterpolymerpartikel bestimmt und kontrolliert. Die Größe der Polymerpartikel hat Einfluss auf rheologische Eigenschaften der wässrigen Dispersionen, beispielsweise auf deren Viskosität, auf die Formulierbarkeit mit Zusatzstoffen, auf die Abbindegeschwindigkeit, auf Transparenz und Glanz eines Beschichtungsfilms, auf die Wasseraufnahme eines Bindemittelfilms, auf seine mechanische Festigkeit, z.B. auf seine Nassabriebfestigkeit.

Die Größe der Polymerpartikel kann mit dem gewichtsmittleren Partikeldurchmesser Dw oder dem zahlenmittleren Partikeldurchmesser Dn quantifiziert werden. Die Polydispersität PD der Größe der Polymerpartikel kann mit dem Verhältnis aus gewichtsmittlerem und zahlenmittlerem Partikeldurchmesser spezifiziert werden: PD = Dw/Dn. Im Folgenden werden die Begriffe "Partikel" und "Teilchen" synonym verwendet. Dasselbe gilt auch für die Begriffspaare "Partikelgröße" und "Teilchengröße", bzw. "Partikelgröße" und "Teilchendurchmesser", bzw. "Partikelgrößenverteilung" und "Teilchengrößenverteilung".

Aus dem Stand der Technik sind verschiedene Ansätze zur Steuerung der Größe der Polymerpartikel bekannt. So lehrt die DE 1595402 hierfür den Einsatz bestimmter Mengen an Emulgatoren bzw. Schutzkolloiden. Eine Verringerung der Emulgatormenge und eine Vergrößerung der Schutzkolloidmenge führen zu Polymeren mit größeren mittleren Teilchengrößen. GB857514 beschreibt Verfahren zur Herstellung von Polymeren in Gegenwart von Schutzkolloiden, Emulgatoren und acetylenischen ditertiären Alkoholen, bei denen "feine Teilchen" durch vollständige Dosierung der Monomere und "grobe Teilchen" dagegen durch insgesamte Zugabe der Monomere beim Start der Polymerisation erhalten werden. Nachteiliger Weise sind Emulgatoren für dieses Verfahren unerlässlich. DE102009008143 beschreibt die Herstellung von Vinylacetat-Ethylen-Copolymerdispersionen mit mittleren Teilchendurchmessern Dw von 50 bis 500 nm und Polydispersitäten PD zwischen 1,19 und 1,39, indem in Gegenwart von Emulgatoren und gegebenenfalls Schutzkolloiden polymerisiert wird, wobei mindestens eine doppelt so große Menge an Emulgatoren als an Schutzkolloiden eingesetzt wird. DE 102006037317 offenbart grobpartikuläre, Schutzkolloid- und Emulgator-stabilisierte Vinylester-Copolymere. Emulgator-freie Dispersionen und Polymere mit Teilchengrößen Dw von kleiner 500 nm sind auf diese Weise nicht erhältlich. Zudem erwähnt DE 102006037317, dass handelsübliche, ausschließlich Polyvinylalkohol-stabilisierte Vinylacetat-Ethylen-Copolymerdispersionen üblicherweise einen mittleren Durchmesser von Dw = 860 nm und eine Polydispersität von PD = 2,26 aufweisen.

DE 1260145 beschreibt Verfahren zur Emulsionspolymerisation olefinisch ungesättigter Verbindungen in Gegenwart von modifizierten Polyvinylalkoholen sowie gegebenenfalls Emulgatoren, wobei im Beispiel die Gesamtmenge an Polyvinylalkohol im Reaktor vorgelegt und die Gesamtmenge am Monomer während der Polymerisation zudosiert wird, was zu einer Teilchengröße von etwa 500 nm führt. Nachteiliger Weise erlaubt das Verfahren nicht, Polymere mit anderen mittleren Teilchengrößen gezielt herzustellen.

DE 1029565 beschreibt Verfahren zur Herstellung von wässrigen Polyvinylesterdispersionen, nach denen Polymere mit Teilchengrößen von 500 nm bis 15 $\mu$m gezielt hergestellt werden können, indem eine bestimmte Kombination aus Cellulosederivaten und Alkalisalzen von Oxydiphenylen sowie Salzen anorganischer oder organischer Säuren eingesetzt werden. Diese zusätzlichen Hilfsstoffe verschlechtern die Wasserfestigkeit. Teilchengrößen kleiner 500 nm sind nicht zugänglich.

DE 10337183 beschreibt die Herstellung von mehrmodalen Polymerdispersionen mit einer Polydispersität PD sehr viel größer als 2, wobei mindestens zwei Polyvinylalkohole unterschiedlicher Molmasse im Reaktor vorgelegt und ionische Comonomere polymerisiert werden. DE 10035589 beschreibt die Herstellung hochfeststoffhaltiger Dispersionen auf Basis von Vinylestern und Ethylen ohne Zusatz von Emulgator in Gegenwart von Schutzkolloid und Saatlatex. Bei gewichtsmittleren Teilchengrößen von größer 2000 nm werden Polydispersitäten PD zwischen 1,44 und 45,0 erhalten.

EP 1215219 beschreibt den Einsatz von Polyvinylacetalen als Schutzkolloid. Das Verfahren führt zu Polymerpartikeln mit Polydispersitäten PD viel größer als 1,6. DE 19962566 beschreibt die Herstellung von Vinylester-(Meth)acrylsäureester-Mischpolymerisaten in Gegenwart von Polyvinylalkohol, wobei zumindest 50-Gew.-% der Vinylester vorgelegt werden. EP 1420033 beschreibt den Einsatz von Ethylenmodifizierten Polyvinylalkoholen. Die Verfahren der EP 1420033 wie auch die DE 19962566 führen zu Polymerisaten mit mittleren Teilchengrößen Dw von > 700 nm und Polydispersitäten PD von > 1.6.

EP 1262465 beschreibt Emulsionspolymerisationen in Gegenwart von Schutzkolloiden, wobei in einer ersten Stufe Vinylester und in einer zweiten Stufe (Meth)acrylsäureester polymerisiert werden. Auf diese Weise werden teils nur sehr grobteilige Polymerdispersionen mit gewichtsmittleren Teilchendurchmessern Dw > 2 μm erhalten, Teilchengrößen kleiner etwa 700 nm sind dagegen nicht zugänglich und die Polydispersität PD ist jeweils deutlich größer als 1,6.

EP 1420033 beschreibt Verfahren zur Herstellung von Schutzkolloidstabilisierten Vinylaromat-1,3-Dien-Copolymerisaten. Es werden nachteiliger Weise nur sehr grobteilige Dispersionen mit gewichtsmittleren Durchmessern Dw > 2,5 μm mit hoher Polydispersität PD >> 1.6 erhalten.

EP 1788001 beschreibt Verfahren zur Herstellung von Polyvinylalkohol-stabilisierten Polymerdispersionen durch Emulsionspolymerisation in Abwesenheit von Emulgator bei Temperaturen oberhalb 100°C. Auch dieses Verfahren führt zu Polymerteilchen mit gewichtsmittleren Teilchengrößen Dw oberhalb 800 nm mit breiter Teilchengrößenverteilung PD > 1,6.

DE 3227090 beschreibt die Herstellung wässriger Dispersionen durch Emulsionspolymerisation von Vinylhalogeniden und/oder Vinylestern unter Einsatz von Schutzkolloiden, welche erst nach Beginn der Polymerisation zugesetzt werden. Dabei erzielte Teilchengrößen, die in der Schrift nicht näher spezifiziert werden, liegen unterhalb etwa 1 μm mit breiter Verteilung. Nachvollzug des beschriebenen Verfahrens der DE 3227090 in der EP 0224169 in Versuchen der Gruppe A lieferte allerdings im Versuch A10 der EP 0224169 einen Gewichtsmittelwert von 1,87 μm bei einer Polydispersität von PD = 9,35 und für den Versuch A11 einen Gewichtsmittelwert von 1,35 μm bei einer Polydispersität von PD = 7,1. In EP 0224169 wurde weiterhin gezeigt, dass die in DE 3227090 beschriebenen Verfahren nicht reproduzierbar ausgeführt werden können.

EP 0224169 beschreibt feinteilige, Schutzkolloid-stabilisierte Vinylchlorid-Ethylen-Copolymerdispersionen, deren Partikel nicht teilflockuliert sind und gewichtsmittlere Teilchengrößen - bestimmt in der Disc-Zentrifuge - von 150 nm bis 500 nm und eine Polydispersität PD von höchstens 1,8 besitzen, wobei weniger als 50 Gew.-% der Polymerteilchen größer als 1000 nm sind. Der EP 0224169 sind keine geeigneten Maßnahmen entnehmbar, mit denen die Teilchengrößen der Polymere gezielt variiert werden können. Des Weiteren sind Polyvinylhalogenide heutzutage verpönt, so dass Bedarf besteht, Polyvinylhalogenide durch andere Polymersysteme zu substituieren, nach Möglichkeit ohne ein Einbuße an anwendungstechnischen oder sonstigen Eigenschaften hinnehmen zu müssen.

Insgesamt sind also verschiedenste Varianten der Emulsionspolymerisation bekannt. Für die Herstellung von Schutzkolloid-stabilisierten Vinylesterpolymeren werden meist zumindest ein größerer Teil der Monomere und des Schutzkolloids oder sogar die gesamte Schutzkolloidmenge vorgelegt. Die bisher bekannten Maßnahmen führen aber im Allgemeinen zu Polymerpartikeln mit gewichtsmittleren Teilchengrößen von größer 700 nm oder 800 nm mit Polydispersitäten PD > 1,6 oder sogar zumeist > 2. Ein Grund hierfür sind Partikelaggregationsprozesse, die im Zuge der Polymerisationsreaktion, deutlich nach Abschluss der eigentlichen Partikelbildungsphase, ablaufen - wie beispielsweise in der EP 0224169 unter dem Begriff Teilchenflockulation diskutiert. Zeitpunkt, Ausmaß und Ergebnis dieser Patikelaggregationsprozesse sind von den jeweils konkreten Bedingungen des Verfahrens abhängig: Tritt Partikelaggregation bei relativ geringen Monomerumsatzwerten auf, so haben die entstandenen Partikelaggregate die Möglichkeit, während der Polymerisation wieder zu homogenen sphärischen Teilchen zusammenzuwachsen; tritt Partikelaggregation jedoch relativ spät und/oder bei hohen Monomerumsatzwerten auf, so können im Endprodukt nicht-sphärische Partikelaggregate vorliegen. Diese verursachen beispielsweise hohe Dispersionsviskositäten. Insgesamt bieten die bekannten Verfahren der Emulsionspolymerisation zur Herstellung von Vinylesterpolymeren in Gegenwart von Schutzkolloiden insbesondere auch wegen der genannten Patikelaggregationsprozesse nur begrenzte Möglichkeiten zur Einstellung gewünschter Partikelgrößen. Bisher ist auch nicht bekannt, wie feinteilige, insbesondere alleinig durch Schutzkolloid stabilisierte Dispersionen, mit Polydispersitäten PD < 1,6 gezielt hergestellt werden können.

Zudem sind Partikelaggregate unter mechanischer Scherbelastung desaggregierbar, was zu Änderungen der Partikelgrößenverteilung und der Dispersionsviskosität führt. Änderungen solcher Eigenschaften der Dispersionen sind aber unerwünscht und sollen vermieden werden.

Der Einsatz von Schutzkolloiden, insbesondere von Polyvinylalkoholen, in Polymerdispersionen ist häufig auf Grund ihrer vorteilhaften anwendungstechnischen Eigenschaften gewünscht. Im Unterschied zu Emulgatoren tragen diese beispielsweise zur Steigerung der mechanischen Festigkeit von Anwendungsprodukten bei, wie beispielsweise in Klebemitteln für Papier, Verpackungen oder für Holzverklebung, aber auch bei Anwendung als Bindepulver, beispielsweise in Fliesenklebern. Emulgatoren, insbesondere niedermolekulare Emulgatoren, können im Bindemittelfilm migrieren, was zu einer zeitlichen Änderung seiner Eigenschaften, beispielsweise zur Abnahme seiner Festigkeit, führen kann. Außerdem ist es unter ökologischen Gesichtspunkten wünschenswert auf niedermolekulare Emulgatoren, insbesondere auf Alkylphenolethoxylate, zu verzichten und ausschließlich mit Schutzkolloid zu arbeiten. Gerade an Verfahren zur gezielten Herstellung von Schutzkolloid-stabilisierten, feinteiligen Vinylesterpolymeren mit bestimmten, einstellbaren Teilchendurchmessern und niedrigen Polydispersitäten PD besteht deswegen noch großer Bedarf.

Aufgabe der vorliegenden Erfindung ist es deshalb, Verfahren zur Herstellung von Schutzkolloid-stabilisierten wässrigen Dispersionen von Vinylesterpolymeren bereitzustellen,

(1) mit denen Vinylesterpolymere mit gewichtsmittleren Partikeldurchmessern Dw von 120 nm bis 1.500 nm und einer Polydispersität PD < 1,6, bevorzugt PD ≤ 1,5, noch mehr bevorzugt PD ≤ 1,4, insbesondere bevorzugt PD ≤ 1,3, nach Möglichkeit PD ≤ 1,2 und im Speziellen PD ≤ 1,15 gebildet werden,

(2) mit denen es möglich ist, gewichtsmittlere Partikeldurchmesser Dw der Vinylesterpolymere mit gewünschten Werten innerhalb des Bereichs von 120 nm bis 1.500 nm gezielt herzustellen, wobei eine Polydispersität PD < 1,6, bevorzugt PD ≤ 1,5, noch mehr bevorzugt PD ≤ 1,4, insbesondere bevorzugt PD ≤ 1,3 nach Möglichkeit PD ≤ 1,2 und im Speziellen PD ≤ 1,15 erreicht werden soll,

(3) deren Partikel weitgehend, möglichst vollständig, in einem nicht aggregierten, d.h. nicht flockulierten Zustand vorliegen,

(4) die vorzugsweise rückstandsarm sind: Es wird gefordert, dass der Koagulatanteil, KOA, Werte < 0,2 Gew.-%, vorzugsweise 0,1 Gew.-%, bezogen auf das Gesamtgewicht der eingesetzten Monomere, annimmt und der Siebrückstand SR Werte von < 1000 ppm, vorzugsweise Werte < 750 ppm aufweist;

(4a) deren Viskositäten, gemessen als Brookfield-Viskositäten Bf20, in einem weiten Bereich gezielt einstellbar sind, beispielsweise im Bereich zwischen 100 und 30.000 mPas, bevorzugt zwischen 100 und 15.000 mPas;

(5) die frei von Vinylhalogeniden und nach Möglichkeit im Wesentlichen frei von Formaldehyd sind.

Die Methoden zur Bestimmung des Koagulatanteils KOA, des Siebrückstandes SR und der Viskosität Bf20 werden weiter unten im Abschnitt "Testmethoden für charakteristische Dispersionskennwerte" beschrieben.

Überraschenderweise wurde die Aufgabe dadurch gelöst, dass die Konzentration der Schutzkolloide vor Beginn der Polymerisation, d.h. zum Zeitpunkt des Starts der Polymerisation, und vorzugsweise auch während der Polymerisation, insbesondere in der Anfangsphase bzw. der Partikelbildungsphase der Polymerisation innerhalb bestimmter Bereiche lag. Des Weiteren erwies es sich als wesentlich, dass die Vinylester nicht vorgelegt, sondern vollständig zudosiert wurden.

Gegenstand der vorliegenden Erfindung sind Verfahren zur Herstellung von Schutzkolloid-stabilisierten wässrigen Dispersionen von Vinylesterpolymeren mit gewichtsmittleren Teilchendurchmessern Dw von 120 nm bis 1.500 nm und einer Polydispersität PD von < 1,6 mittels radikalisch initiierter Emulsionspolymerisationen von einem oder mehreren Vinylestern und gegebenenfalls einem oder mehreren weiteren ethylenisch ungesättigten Monomeren in wässrigem Medium in Gegenwart von einem oder mehreren Schutzkolloiden, dadurch gekennzeichnet, dass

eine wässrige Mischung enthaltend 0 bis 90 Gramm an einem oder mehreren Schutzkolloiden pro Liter Wasser der Vorlage (Konzentration (C)) vorgelegt wird und

beginnend mit oder nach Start der Zudosierung von einem oder mehreren Initiatoren ein oder mehrere Schutzkolloide und die insgesamt eingesetzte Menge an Vinylestern zudosiert werden,

wobei die Emulsionspolymerisationen in Abwesenheit von Vinylhalogeniden durchgeführt werden und

während der Emulsionspolymerisationen keine Emulgatoren eingesetzt werden.

Ein weiterer Gegenstand der Erfindung sind die nach den vorgenannten Verfahren erhältlichen Schutzkolloid-stabilisierten Vinylesterpolymere in Form von Emulgator-freien wässrigen Dispersionen wie auch die durch Trocknen der vorgenannten Dispersionen erhältlichen Schutzkolloid-stabilisierten Vinylesterpolymere in Form von Emulgator-freien Polymerpulvern, insbesondere in Form von Emulgator-freien in Wasser redispergierbaren Polymerpulvern.

Gegenstand der Erfindung sind auch Verwendungen der vorgenannten Verfahrensprodukte, insbesondere in Form von wässrigen Dispersionen, als Binde- oder Beschichtungsmittel insbesondere in oder als Klebstoffe oder zur Behandlung textiler Flächengebilde.

Gegenstand der Erfindung sind auch Verwendungen der vorgenannten Verfahrensprodukte in Verfahren der radikalisch initiierten Emulsionspolymerisation zur Herstellung von Polymerdispersionen mit Feststoffgehalten von > 60 Gew.-%, vorzugsweise von ≥ 65 Gew.-% mit Polydispersitäten PD > 1,6 sowie Verwendungen der so hergestellten Dispersionen.

Die Polydispersität PD steht für das Verhältnis von gewichtsmittlerem Teilchendurchmesser Dw zu zahlenmittlerem Teilchendurchmesser Dn, PD = Dw/Dn. Die Bestimmung der Parameter Dw und Dn erfolgt mittels Laserlichtbeugung und Laserlichtstreuung mit dem Messgerät LS13320 mit dem optischen Modell PVAC.RF780D, einschließend PIDS, der Firma Beckmann-Coulter unter Verwendung der Stoffkonstanten für Polyvinylacetat und unter Beachtung der Vorschrift des Geräteherstellers nach hinreichender Verdünnung der wässrigen Polymerdispersionen mit vollentsalztem Wasser. Wie dem Fachmann wohlbekannt, können mit anderen Geräten oder Messmethoden erzielte Ergebnisse von den Ergebnissen der hier angegebenen Methode abweichen.

Die Vinylesterpolymere haben gewichtsmittlere Partikeldurchmesser Dw zwischen 120 nm und 1.500 nm, bevorzugt zwischen 150 und 1.200 nm, mehr bevorzugt zwischen 180 und 1.100 nm, insbesondere zwischen 200 und 1.000 nm und im Speziellen zwischen 220 und 900 nm. Die Vinylesterpolymeren haben eine Polydispersität PD < 1,6, bevorzugt PD ≤ 1,5, noch mehr bevorzugt PD ≤ 1,4, insbesondere bevorzugt PD ≤ 1,3, nach Möglichkeit PD ≤ 1,2 und im Speziellen PD ≤ 1,15.

Für die erfindungsgemäße Einstellung der gewichtsmittleren Partikelgrößen Dw ist es wesentlich, dass 0 bis 90 Gramm, bevorzugt 0,1 bis 75 Gramm, mehr bevorzugt 1 bis 65 Gramm, noch mehr bevorzugt 1 bis 55 Gramm, insbesondere 5 bis 50 Gramm und im Speziellen 10 bis 45 Gramm an einem oder mehreren Schutzkolloiden pro Liter Wasser der Vorlage (Konzentration (C)) im Reaktor vorgelegt werden und beginnend mit oder nach Start der Dosierung von einem oder mehreren Initiatoren ein oder mehrere Schutzkolloide und die insgesamt eingesetzte Menge an Vinylestern zudosiert werden.

Die Gesamtmenge an Vinylester wird beginnend mit oder nach Start der Dosierung von einem oder mehreren Initiatoren über einen Zeitraum von bevorzugt einer Stunde bis zu 6 Stunden, besonders bevorzugt in 1,5 bis 5 Stunden, mehr bevorzugt in 2 bis 4 Stunden zudosiert. Innerhalb des Dosierzeitraums kann die Dosierrate der Vinylester konstant sein oder variieren, beispielsweise kontinuierlich oder in Stufen erhöht werden.

Die Zudosierung von einem oder mehreren Schutzkolloiden erfolgt insbesondere während eines Zeitraums von 1 bis < 30 Minuten, bevorzugt von 1 bis 15 Minuten, mehr bevorzugt von 1 bis 10 Minuten und insbesondere von 1 bis 5 Minuten nach Start der Polymerisationsreaktion oder während eines Zeitraums von vorzugsweise bis zu 30 Minuten, besonders bevorzugt von bis zu 20 Minuten, mehr bevorzugt von bis zu 15 Minuten, insbesondere von bis zu 10 Minuten nach Start der Zudosierung der Schutzkolloide mit einer Zugaberate von vorzugsweise 0,1 bis 5 Gramm Schutzkolloid pro Liter Wasser der Vorlage und Minute (Anfängliche Zugaberate (VZ)). Die Anfängliche Zugaberate (VZ) hat also die Einheit g / (l min). Zu späteren Zeiträumen, d.h. im Anschluss an die Zudosierung der Schutzkolloide gemäß Anfänglicher Zugaberate kann die Zudosierung von einem oder mehreren Schutzkolloiden gleich der Anfänglichen Zugaberate (VZ), kleiner oder größer als die Anfängliche Zugaberate (VZ) sein. Die Gewichtsangabe "Gramm Schutzkolloid" bezieht sich auf die Trockensubstanz an Schutzkolloid. Die Volumenangabe "Liter Wasser der Vorlage" bezieht sich auf die Menge an Wasser in der Vorlage vor Beginn jeglicher Dosierung. Das Bereiten der Vorlage endet mit Beginn der Zudosierung von Initiator. Dosierungen, auch Zudosierungen oder Zugaben genannt, umfassen im Allgemeinen wässrige Initiatorlösungen, wässrige Schutzkolloidlösungen und andere wässrige Lösungen oder Emulsionen enthaltend ethylenisch ungesättigte Monomere.

Der "Start der Polymerisationsreaktion" liegt nach dem Start der Zudosierung von Initiator. Der Start der Polymerisationsreaktion ist an der Erwärmung des Polymerisationsansatzes erkennbar, beispielsweise wenn sich der Polymerisationsansatz um 0,1°C bis 1°C erwärmt. Der Temperaturanstieg hängt bekanntlich vom jeweiligen Reaktorvolumen, dessen Füllgrad und den jeweiligen Kühlbedingungen ab. Die Erwärmung des Polymerisationsansatzes ist auch daran erkennbar, dass die Temperaturregelung auf Kühlung umschaltet. Sie ist gegebenenfalls auch daran erkennbar, dass sich der Druck im Reaktor um 0,1 bis 0,5 bar erhöht.

Im Allgemeinen wird mit der Zudosierung von einem oder mehreren Schutzkolloiden begonnen, wenn 0,0 bis 10 Gew.-%, bevorzugt 0,0 bis 6 Gew.-%, mehr bevorzugt 0,0 bis 3 Gew.-%, insbesondere 0,0 bis 1 Gew.-% und im Speziellen 0,0 Gew.-% an einem oder mehreren Vinylestern, bezogen auf das Gesamtgewicht an Vinylester, zudosiert sind.

Im Allgemeinen wird mit der Zudosierung von Schutzkolloid mit der Anfänglichen Zugaberate (VZ) im Zeitraum 0,0 bis < 30 Minuten, bevorzugt im Zeitraum 0,0 bis 20 Minuten, mehr bevorzugt im Zeitraum 0,0 bis 15 Minuten, noch mehr bevorzugt im Zeitraum 0,0 bis 10 Minuten nach Beginn der Vinylesterdosierung begonnen; insbesondere wird mit der Zudosierung von Schutzkolloid gleichzeitig mit Start der Vinylesterdosierung begonnen.

Kombinationen der vorgenannten Bereiche für die Konzentration (C) und die Anfänglichen Zugaberaten (VZ) sowie für den Beginn der Zudosierung der Schutzkolloide sind besonders vorteilhaft zur wahlweisen, gezielten Einstellung der gewichtsmittleren Partikeldurchmesser Dw.

Für die Konzentration (C) an Schutzkolloid in der Vorlage sind folgende Bereiche bevorzugt:

(a) Für die Herstellung von besonders feinteiligen Dispersionen mit gewichtsmittleren Partikelgrößen Dw von 120 bis 200 nm, insbesondere mit Feststoffgehalten von 30 bis 55 Gew.-%, bevorzugt von 30 bis 45 Gew.-%, insbesondere von 30 bis 40 Gew.-%, bezogen auf das Gesamtgewicht der Dispersionen, werden vorzugsweise Konzentrationen (C) zwischen 90 und 55, bevorzugt zwischen 85 und 60 Gramm Schutzkolloid pro Liter Wasser der Vorlage eingesetzt (Dispersion (a)).

(b) Für die Herstellung von Dispersionen mit gewichtsmittleren Partikelgrößen Dw von größer 200 bis kleiner 500 nm, insbesondere mit Feststoffgehalten von 30 bis 55 Gew.-%, vorzugsweise 45 bis 55 Gew.-%, bezogen auf das Gesamtgewicht der Dispersionen, werden vorzugsweise Konzentrationen (C) zwischen 55 und 15, bevorzugt zwischen 50 und 15 und insbesondere 45 bis 15 Gramm Schutzkolloid pro Liter Wasser der Vorlage eingesetzt(Dispersion (b)).

(c) Für die Herstellung von Dispersionen mit gewichtsmittleren Partikelgrößen Dw von ≥ 500 nm, insbesondere mit Feststoffgehalten von 30 bis 60 Gew.-%, bevorzugt von 45 bis 60 Gew.-% und insbesondere von 45 bis 55 Gew.-

%, bezogen auf das Gesamtgewicht der Dispersionen, werden vorzugsweise Konzentrationen (C) zwischen 15 und 0,0 Gramm Schutzkolloid pro Liter Wasser der Vorlage eingesetzt (Dispersion (c)).

Zur Herstellung besonders stabiler und rückstandsarmer Dispersionen ist es besonders vorteilhaft, je nach Feststoffgehalt der jeweiligen, herzustellenden Dispersion bestimmte erfindungsgemäße Konzentrationen (C) im erfindungsgemäßen Verfahren einzusetzen. Hierbei besteht zwischen den Feststoffgehalten der Dispersionen und den Konzentrationen (C) ein Zusammenhang, der mit folgender allgemeiner Formel (I) als lineare Korrelation abgebildet wird:

$$(C) \leq ((a - FG) / b) \qquad (I),$$

worin

(C) für den Zahlenwert der Konzentration (C),
FG für den Zahlenwert des Feststoffgehalts FG der jeweiligen, nach erfindungsgemäßen Verfahren hergestellten Dispersion steht, a einen Wert aus dem Bereich von 80 bis 86 und
b einen Wert aus dem Bereich von 0,50 bis 0,60 annehmen können, wobei (C) $\leq$ 90 ist.

Zur Herstellung von Dispersionen mit Feststoffgehalten FG von 30 bis < 40 Gew.-% werden Zahlenwerte der Konzentrationen (C) von 0 bis < 78 bevorzugt und von 0 bis < 67 besonders bevorzugt. Zur Herstellung von Dispersionen mit Feststoffgehalten FG von 40 bis $\leq$ 45 Gew.-% werden Zahlenwerte der Konzentrationen (C) von 0 bis 78 bzw. 0 bis 67 bevorzugt und von 0 bis $\leq$ 82 bzw. 0 bis $\leq$ 69 bzw. 0 bis $\leq$ 58 besonders bevorzugt. Zur Herstellung von Dispersionen mit Feststoffgehalten FG von 45 bis $\leq$ 55 Gew.-% werden Zahlenwerte der Konzentrationen (C) von 0 bis 82 bzw. 0 bis 69 bzw. 0 bis 58 bevorzugt und 0 bis $\leq$ 62 bzw. 0 bis $\leq$ 51 bzw. 0 bis $\leq$ 42 besonders bevorzugt. Zur Herstellung von Dispersionen mit Feststoffgehalten FG von 55 bis 60 Gew.-% werden Zahlenwerte der Konzentrationen (C) von 0 bis 62 bzw. von 0 bis 51 bzw. von 0 bis 42 bevorzugt und von 0 bis $\leq$ 52 bzw. 0 bis $\leq$ 42 bzw. 0 bis $\leq$ 32 besonders bevorzugt.

Für die Anfängliche Zugaberate (VZ) an Schutzkolloid sind folgende Bereiche bevorzugt:

(α) Für die Herstellung der besonders feinteiligen Dispersionen (a) beträgt die Anfängliche Zugaberate (VZ) bevorzugt 0,1 bis 2 und insbesondere 0,2 bis 1,5 Gramm pro Liter Wasser der Vorlage und Minute.

(β) Für die Herstellung der Dispersionen (b) beträgt die Anfängliche Zugaberate (VZ) bevorzugt 0,2 bis 3 und insbesondere 0,2 bis 2 Gramm pro Liter Wasser der Vorlage und Minute.

(γ) Für die Herstellung der Dispersionen (c) beträgt die Anfängliche Zugaberate (VZ) bevorzugt 0,3 bis 5 und insbesondere 0,3 bis 3 Gramm pro Liter Wasser der Vorlage und Minute.

Für die Herstellung von Dispersionen mit gewichtsmittleren Partikelgrößen Dw von 700 nm bis 1.500 nm, insbesondere mit Feststoffgehalten von 30 bis 60 Gew.-%, vorzugsweise von 45 bis 60 Gew.-%, und insbesondere von 45 bis 55 Gew.-%, bezogen auf das Gesamtgewicht der Dispersionen, werden Konzentrationen (C) zwischen 0,0 und 8 Gramm, insbesondere zwischen 0,1 und 6 Gramm, und im Speziellen zwischen 1 und 5 Gramm oder auch 0,0 Gramm Schutzkolloid pro Liter Wasser der Vorlage bevorzugt, und die Anfängliche Zugaberate (VZ) der Schutzkolloide beträgt vorzugsweise zwischen 0,3 und 3,0 Gramm pro Liter Wasser der Vorlage und Minute, bevorzugt zwischen etwa 0,5 und 2,0 Gramm pro Liter Wasser der Vorlage und Minute.

Im Allgemeinen werden umso größere Werte für die gewichtsmittleren Partikeldurchmesser Dw erhalten, je geringer die Konzentration (C) an vorgelegtem Schutzkolloid und je geringer die Anfängliche Zugaberate (VZ) an Schutzkolloid gewählt werden. Umgekehrt erhält man umso kleinere Werte für die gewichtsmittleren Partikeldurchmesser Dw, je höher die Konzentration (C) an vorgelegtem Schutzkolloid und je höher die Anfängliche Zugaberate (VZ) gewählt werden. Insbesondere für niedrige Werte der Konzentration (C) ist die Anfängliche Zugaberate (VZ) von besonders großem Einfluss auf die gewichtsmittleren Partikelgrößen Dw.

Insgesamt werden vorzugsweise 3 bis 15 Gew.-%, besonders bevorzugt 4 bis 12 Gew.-% und insbesondere 5 bis 11 Gew.-% an Schutzkolloid, bezogen auf das Gesamtgewicht aller Monomere, eingesetzt.

Die Einstellung von gewichtsmittleren Partikelgrößen Dw erfolgt im Wesentlichen durch die Konzentration (C) und gegebenenfalls die Anfängliche Zugaberate (VZ) und nicht durch das Mengenverhältnis von Schutzkolloid und dem Gesamtgewicht aller eingesetzten Monomere. Die gewichtsmittleren Partikelgrößen Dw der Polymere sind nicht vom absoluten Gewicht an Schutzkolloid in der Vorlage, sondern von seiner Konzentration im Vorlage-Wasser abhängig. Bloße Angaben zur Verteilung von Schutzkolloid auf Vorlage und Dosierung sind demnach völlig unzureichend, um gemäß vorliegenden Verfahren Polymere mit bestimmten gewichtsmittleren Partikelgrößen Dw gezielt herstellen zu können. Wesentlich ist stattdessen die Konzentration der Schutzkolloide charakterisiert durch die Parameter Konzentration (C) und gegebenenfalls die Anfängliche Zugaberate (VZ).

Das Gewicht der gesamten Vorlage beträgt im Allgemeinen 10 bis 30 Gew.-%, bevorzugt 12 bis 28 Gew.-%,

und insbesondere 14 bis 26 Gew.-%, bezogen auf das Gesamtgewicht der Dispersion nach Abschluss der Emulsionspolymerisation, wobei das Gewicht der gesamten Vorlage alle der Vorlage vor Start der Dosierung von einem oder mehreren Initiatoren zugefügten Komponenten einschließt, wie Wasser, Schutzkolloid der Konzentration (C), und sonstige Komponenten, einschließlich etwaiger der Vorlage zugefügter Monomere.

Im Allgemeinen beträgt der Feststoffgehalt der erfindungsgemäß hergestellten Dispersionen 30 bis 60 Gew.-%, bevorzugt 40 bis 60 Gew.-%, insbesondere bevorzugt 45 bis 55 Gew.-% und im Speziellen 47 bis 53 Gew.-%, bezogen auf das Gesamtgewicht der Dispersion.

Im Allgemeinen beträgt die Brookfield-Viskosität Bf20 der erfindungsgemäß hergestellten Dispersionen 50 bis 30.000 mPas, bevorzugt zwischen 100 und 15.000 mPas, mehr bevorzugt zwischen 100 und 10.000 mPas, insbesondere zwischen 200 und 5.000 mPas, im Speziellen 200 bis 2000 mPas oder 200 bis 1000 mPas (Bestimmungsmethode siehe weiter unten unter Punkt 1.2).

Im Sinne einer möglichst einfachen Prozessführung kann es bevorzugt sein, die Zugaberate an Schutzkolloid über den gesamten Zugabezeitraum konstant zu halten, d.h. die Anfängliche Zugaberate (VZ) in weiteren Dosierzeiträumen nicht zu ändern, sofern dies die Massebilanz für den Schutzkolloidanteil in den vorgesehenen Dosier- bzw. Zugabezeiträumen erlaubt. In diesem Sinne ist es auch bevorzugt, die Dosierrate an Vinylester über den gesamten Zeitraum der Vinylesterdosierung konstant zu halten. Die Verwendung von konstanten Zugaberaten an Schutzkolloid und konstanten Dosierraten an Vinylester führt zu gegebenenfalls vorteilhaften konstanten Gewichtsverhältnissen von in den Reaktor dosierten Mengen an Schutzkolloid und Vinylester.

Die in erfindungsgemäßen Verfahren erhaltenen Partikelgrößen der Vinylesterpolymere sind im Allgemeinen durch eine monomodale Partikelgrößenverteilung charakterisiert. Für monomodale Partikelgrößenverteilungen besitzt die Volumenhäufigkeitsverteilung der Partikelgröße im Allgemeinen genau ein Maximum. Gelegentlich können während der Polymerisation noch gewisse Anteile an feinteiligen oder grobteiligen Partikelfraktionen entstehen, die Nebenmaxima der Volumenhäufigkeitsverteilung bilden. Ein etwaiges Nebenmaximum einer grobteiligen Partikelfraktion liegt bei größeren Partikeldurchmessern als das Hauptmaximum der Volumenhäufigkeitsverteilung. Ein etwaiges Nebenmaximum einer feinteiligen Partikelfraktion liegt dagegen bei kleineren Partikeldurchmessern als das Hauptmaximum der Volumenhäufigkeitsverteilung. Die erfindungsgemäß hergestellten Vinylesterpolymere enthalten nicht mehr als 6 Vol.-%, bevorzugt nicht mehr als 3 Vol.-% an feinteiligen Partikelfraktionen. Die erfindungsgemäß erhaltenen Vinylesterpolymere enthalten nicht mehr als 6 Vol.-%, bevorzugt nicht mehr als 3 Vol.-% an grobteiligen Partikelfraktionen.

In bevorzugten Ausführungsformen erfindungsgemäßer Verfahren werden:

(i) wenigstens 70 Gew.-%, bezogen auf das Gesamtgewicht aller eingesetzten Monomere, an einem oder mehreren Vinylestern eingesetzt;

(ii) beträgt die Konzentration (C) an Schutzkolloid 0,0 bis 55 Gramm, insbesondere 1 bis 50 Gramm pro Liter Wasser der Vorlage, insbesondere zur Herstellung von Dispersionen mit Feststoffgehaltswerten zwischen 45 und 55 Gew.-%, bezogen auf das Gesamtgewicht der Dispersion;

(iii) wird Schutzkolloid beginnend mit oder nach Start der Dosierung von einem oder mehreren Initiatoren mit einer Anfänglichen Zugaberate (VZ) von 0,1 bis 5 Gramm Schutzkolloid pro Liter Wasser der Vorlage und Minute wenigstens für einen Zeitraum von 1 bis < 30 Minuten nach Start der Polymerisationsreaktion oder für einen Zeitraum von 0 bis < 30 Minuten nach Start der Dosierung der Initiatoren zudosiert;

(iv) wird kein Vinylester vorgelegt und kein Emulgator eingesetzt,

(v) wird mit der Zudosierung von Schutzkolloid begonnen, wenn 0,0 bis 5 Gew.-% an Vinylester zudosiert sind;

(vi) wird mit Zudosierung von Schutzkolloid mit einer Anfänglichen Zugaberate (VZ) im Zeitraum 0,0 bis < 30 Minuten nach Beginn der Vinylesterdosierung begonnen; insbesondere wird mit der Zudosierung von Schutzkolloid gleichzeitig mit Start der Vinylesterdosierung begonnen;

(vii) werden die Zugaberaten an Schutzkolloid bzw. Dosierraten an Vinylester über den gesamten Zeitraum der Dosierungen konstant gehalten;

(viii) beginnen die Zudosierung von Vinylester und die Zudosierung von Schutzkolloid zum gleichen Zeitpunkt;

(ix) enden die Zudosierung von Vinylester und die Zudosierung von Schutzkolloid zum gleichen Zeitpunkt.

Die in erfindungsgemäßen Verfahren eingesetzten Monomere umfassen Vinylester und gegebenenfalls weitere ethylenisch ungesättigte Monomere.

Vinylester sind beispielsweise Vinylester von Carbonsäuren mit 2 bis 18 C-Atomen. Bevorzugte Vinylester sind Vinylpropionat, Vinylbutyrat, Vinyl-2-ethylhexanoat, Vinyllaurat, 1-Methylvinylacetat, Vinylpivalat und Vinylester von $\alpha$-verzweigten Monocarbonsäuren mit 9 bis 11 C-Atomen, bekannt unter den Handelsnamen VeoVa9® oder VeoVa10®, und insbesondere Vinylacetat. Vinylester können allein oder im Gemisch eingesetzt werden. Es ist bevorzugt, dass bei Einsatz von Vinylestergemischen der Anteil an Vinylacetat mindestens 70 Gew.-%, bezogen auf das Gesamtgewicht der eingesetzten Vinylester, beträgt. Es ist auch bevorzugt, Vinylacetat allein einzusetzen.

Weitere ethylenisch ungesättigte Monomere können beispielsweise ausgewählt werden aus der Gruppen umfassend Ester der Acrylsäure oder Methacrylsäure von unverzweigten oder verzweigten Alkoholen mit 1 bis 15 C-Atomen, Olefine oder Diene.

Bevorzugte Methacrylsäureester oder Acrylsäureester sind Ester wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat.

Geeignete Olefine sind beispielsweise Propylen und insbesondere Ethylen.

Die Emulsionspolymerisation wird in Abwesenheit von Vinylhalogeniden durchgeführt. Beispiele für Vinylhalogenide sind Vinylchlorid.

Gegebenenfalls können zusätzlich Hilfsmonomere copolymerisiert werden. Beispiele für Hilfsmonomere sind ethylenisch ungesättigte Mono-und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-(Isobutoxymethyl)acrylamid (IBMA), N-(Isobutoxymethyl)methacrylamid (IBMMA), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat.

Bevorzugte Hilfsmonomere sind Acrylsäureamide, wie Acrylamid und N-Methylolacrylamid und Hydroxyethylacrylat.

Bevorzugte Monomergemische umfassen mindestens 70 Gew.-% an einem oder mehreren Vinylestern, davon vorzugsweise bis zu 100 Gew.-% und besonders bevorzugt 50 bis 100 Gew.-% und insbesondere 70 bis 100 Gew.-% an Vinylacetat, bezogen auf das Gesamtgewicht an Vinylester, und bis zu 30 Gew.-% an Ethylen, vorzugsweise 4 bis 25 Gew.-% an Ethylen, jeweils bezogen auf das Gesamtgewicht aller eingesetzten Monomere, wobei sich deren Anteile zu 100 Gew.-% aufaddieren. Die damit erhältlichen Dispersionen werden vorzugsweise als Bindemittel oder Klebemittel oder zur Herstellung von Polymerpulvern, insbesondere von in Wasser redispergierbaren Polymerpulvern eingesetzt.

Weitere bevorzugte Monomergemische umfassen mindestens 90 Gew.-%, bevorzugt wenigstens 95 Gew.-% an einem oder mehreren Vinylestern, bezogen auf das Gesamtgewicht aller eingesetzter Monomere, und ein oder mehrere Acrylsäureamide, insbesondere N-Methylolacrylamid, gegebenenfalls in Form von wässrigen Gemischen mit Acrylamid, N-(Isobutoxymethyl)acrylamid (IBMA), N-(Isobutoxymethyl)methacrylamid (IBMMA), N-(n-Butoxymethyl)acrylamid (NBMA) oder N-(n-Butoxymethyl)methacrylamid (NBMMA). Besonders bevorzugt sind N-(Isobutoxymethyl)acrylamid (IBMA) oder N-(n-Butoxymethyl)acrylamid (NBMA). Wässrige Gemische mit einem molaren Verhältnis von etwa 1:1 an N-Methylolacrylamid und Acrylamid sind auch unter dem Namen "NMA-LF" oder "MAMD" bekannt.

Für die genannten bevorzugten Monomergemische werden als Vinylester vorzugsweise Vinylacetat und ein oder mehrere Versaticsäurevinylester eingesetzt, wobei der Anteil an Vinylacetat wenigstens 70 Gew.-%, bevorzugt wenigstens 80 Gew.-% beträgt, bezogen auf das Gesamtgewicht der Vinylester.

Acrylsäureamide werden in den Monomergemische zu Anteilen von vorzugsweise bis zu 3 Gew.-%, besonders bevorzugt zu Anteilen von 2 bis 0,1 Gew.-%, insbesondere zu 2 bis 0,5 Gew.-% eingesetzt, wobei der Anteil an N-Methylolacrylamid höchstens 1 Gew.-% bezogen auf das Gesamtgewicht aller eingesetzter Monomere beträgt. Im Speziellen wird jedoch kein N-Methylolacrylamid eingesetzt.

Die so erhältlichen, Acrylsäureamide enthaltenden Polymere werden bevorzugt als oder in Klebemitteln für wasserfeste Holzverklebungen eingesetzt, welche die Anforderungen an eine Wasserfestigkeit nach DIN EN 204/205 von D3/3 von mindestens 2 N/mm$^2$ oder von D3/3 und D4/5 von mindestens 4 N/mm$^2$ erfüllen.

In einer weiteren bevorzugten Ausführungsform werden Vinylacetat und Ethylen und gegebenenfalls ein oder mehrere weitere Vinylester und gegebenenfalls ein oder mehrere Acrylsäureester und gegebenenfalls ein oder mehrere weitere ethylenisch ungesättigte Monomere eingesetzt, wobei die daraus resultierenden Polymere Glasübergangstemperatur Tg im Bereich von vorzugsweise 20 bis 30°C haben.

Derartige Polymerdispersionen werden bevorzugt als oder in wässrigen Bindemitteln zur Behandlung textiler Flächengebilde, insbesondere in Form eines Teppichs, der auf der von der Trittseite abgewandten Seite mit den nach vorgenannten Verfahren erhältlichen Produkten beschichtet oder teilimprägniert ist, verwendet.

Gegebenenfalls eingesetzte weitere ethylenisch ungesättigte Monomere oder Hilfsmonomere können örtlich und zeitlich getrennt von Vinylestern der Vorlage hinzugefügt oder mit oder nach Start der Dosierung von einem oder mehreren Initiatoren zudosiert werden.

Ethylen wird vorzugsweise vollständig oder teilweise zur wässrigen Vorlage im Reaktor aufgedrückt. Dabei können im Allgemeinen Drücke zwischen 3 bar und 100 bar, besonders zwischen 5 und 80 bar auftreten.

Vorzugsweise werden weitere Monomere oder Hilfsmonomere insgesamt mit oder nach Start der Dosierung von einem oder mehreren Initiatoren zudosiert. Vorzugsweise erfolgt die Zudosierung im Gemisch mit Vinylester. Wasserlösliche Hilfsmonomere werden vorzugsweise in einer wässrigen Dosierung dem Reaktor hinzugefügt; diese wässrige Dosierung ist beispielsweise auch eine wässrige Dosierung enthaltend das zugefügte Schutzkolloid. Es kann vorteilhaft sein, Hilfsmonomere zeitlich versetzt zur Dosierung der Vinylester hinzuzufügen.

In der Regel enden Dosierungen von Monomeren und/oder Hilfsmonomeren vor oder gleichzeitig mit der Dosierung von Vinylester. In Einzelfällen ist es möglich, dass die Dosierung von Vinylester vor der Dosierung anderer Monomerer beendet wird. In der Regel wird eine Dosierung von Ethylen, falls angewendet, jedoch vor Beendigung der Dosierung von Vinylester beendet.

Geeignete Schutzkolloide sind im Allgemeinen wasserlösliche Polymere. Die Löslichkeit der wasserlöslichen Polymere in Wasser beträgt unter Normalbedingungen nach DIN50014 im Allgemeinen > 1 g / 100 ml. Beispiele für Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin) oder Dextrine oder Cyclodextrine, Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Die genannten Schutzkolloide sind mittels dem Fachmann bekannter Verfahren zugänglich. Bevorzugte Schutzkolloide sind Cellulosederivate, Polyvinylpyrrholidone oder insbesondere Polyvinylalkohole. Bevorzugt sind auch Mischungen enthaltend Polyvinylalkohole und Cellulosederivate und/oder Polyvinylpyrrolidone oder Mischungen enthaltend Cellulosederivate und Polyvinylpyrrolidone.

Bevorzugte Cellulosederivate sind Hydroxyethylcellulosen, vorzugsweise mit Viskositäten von $\leq$ 6500 mPas, mehr bevorzugt von $\leq$ 3500 mPas, besonders bevorzugt von $\leq$ 1500 mPas und insbesondere von $\leq$ 500 mPas, bestimmt in 2 Gew.-%-igen wässrigen Lösungen bei 23°C mittels dem Höpplerviskosimeter. Bevorzugte Polyvinylpyrrolidone haben K-Werte zwischen 10 und 30. K-Werte der Polyvinylpyrrolidone werden aus Viskositätsmessungen an wässrigen Lösungen bei 20°C mittels Ubbelohdeviskosimeter für Konzentrationen im Bereich zwischen 0,1 und 10 g/100 ml, insbesondere im Bereich 1 bis 5 g/100 ml berechnet aus der dem Fachmann geläufigen Eigenviskosität k nach Fikentscher, Cellulosechemie 13(1932)58.

Bevorzugt sind teilverseifte Polyvinylalkohole mit einem Hydrolysegrad von 80 bis 96 Mol-%, insbesondere 86 bis 96 Mol-% und mehr bevorzugt 86 bis 90 Mol-%, insbesondere mit einer Höpplerviskosität, in 4 Gew.-%iger wässriger Lösung von 1 bis 30 mPas (Methode nach Höppler bei 20°C, DIN 53015). Die teilverseiften Polyvinylalkohole haben vorzugsweise einen massemittleren Polymerisationsgrad von 200 bis 4.000. Bevorzugt sind auch vollverseifte Polyvinylalkohole mit einem Hydrolysegrad von 96,1 bis 99,9 Mol-%, vorzugsweise 97,5 bis 99,5 Mol-% beispielsweise mit einem massemittleren Polymerisationsgrad von 200 bis 3500. Es können auch Mischungen von teilverseiften und vollverseiften Polyvinylalkoholen eingesetzt werden. Die vorgenannten teilverseiften und vollverseiften Polyvinylalkohole werden im Folgenden auch als Standard-Polyvinylalkohole S-PVOH bezeichnet.

Bevorzugt sind auch modifizierte Polyvinylalkohole, im Folgenden auch X-PVOH genannt, mit einem Hydrolysegrad von 80 bis 99,9 Mol-%, bevorzugt von 85 bis 95 Mol.-%, und einer Höpplerviskosität, in 4 %-iger wässriger Lösung von 1 bis 30 mPas (Bestimmung nach DIN 53015 bei 20°C). Beispiele hierfür sind funktionelle Gruppen tragende Polyvinylalkohole, wie Acetoacetyl-Gruppen. Weitere Beispiele sind teilverseifte Copolymerisate von Vinylacetat mit hydrophoben Comonomeren wie Isopropenylacetat, Vinylpivalat, Vinylethylhexanoat, Vinylester von gesättigten alphaverzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Decen, Styrol. Der Anteil der hydrophoben Einheiten beträgt vorzugsweise 0,1 bis 10 Gew.-%, bezogen auf das Gesamtgewicht des teilverseiften Polyvinylalkohols. Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C1- bis C4-Aldehyden wie Butyraldehyd erhalten werden. Der Anteil der hydrophoben Einheiten beträgt vorzugsweise 0,1 bis 10 Gew.-%, bezogen auf das Gesamtgewicht des teilverseiften Polyvinylacetats. Der Hydrolysegrad beträgt von 80 bis 99,9 Mol-%, vorzugsweise 85 bis 95 Mol-%, die Höpplerviskosität (DIN 53015, Methode nach Höppler, 4 %-ige wässrige Lösung) von 1 bis 30 mPas, vorzugsweise 2 bis 25 mPas. Es können auch Gemische der genannten Polyvinylalkohole eingesetzt werden.

Bevorzugt sind auch Ethylen-Einheiten enthaltende Polyvinylalkohole, sogenannte E-PVOH, die beispielsweise unter dem Handelsnamen EXCEVAL® bekannt sind. E-PVOH sind teil- oder vorzugsweise vollverseifte Copolymerisate von Vinylacetat und Ethylen. Bevorzugte E-PVOH haben einen Ethylen-Anteil 0,1 zu 12 Mol-%, bevorzugt 1 bis 7 Mol-%, besonders bevorzugt 2 bis 6 Mol-% und insbesondere 2 bis 4 Mol-%. Der massemittlere Polymerisationsgrad beträgt 500 bis 5.000, bevorzugt 2.000 bis 4.500 und besonders bevorzugt 3.000 bis 4.000. Der Hydrolysegrad ist im Allgemeinen größer als 92 Mol-%, bevorzugt 94,5 bis 99,9 Mol-% und besonders bevorzugt 98,1 bis 99,5 Mol-%. Natürlich ist es auch möglich und gegebenenfalls vorteilhaft, Mischungen verschiedener ethylenmodifizierter Polyvinylalkohole E-PVOH allein oder in Kombinationen mit teilverseiften und/oder vollverseiften Standard-Polyvinylalkoholen S-PVOH oder anderweitig modifizierten X-PVOH einzusetzen.

Am meisten bevorzugt werden teilverseifte oder insbesondere vollverseifte Polyvinylalkohole. Vorzugsweise werden S-PVOH allein oder in Kombination mit X-PVOH, insbesondere mit E-PVOH eingesetzt. Der Einsatz von E-PVOH und/oder von anderweitig modifiziertem X-PVOH allein, oder in Kombination mit S-PVOH ist insbesondere bei Einsatz der erfindungsgemäßen Verfahrensprodukte als oder in Klebemitteln für wasserfeste Holzverbindungen vorteilhaft.

Werden einzelne Polyvinylalkohole oder Gemische von Polyvinylalkoholen eingesetzt, die vom Typ S-PVOH, oder/und E-PVOH, oder/und X-PVOH sind, so kann es vorteilhaft sein, dass deren Viskositäten 4 Gew.-%iger wässriger Lösungen bei 23°C Werte aus den Bereichen 3 bis 6 mPas, bzw. 6,1 bis 10 mPas, bzw. 10,1 bis 15 mPas, bzw. 15,1 bis 20 mPas annehmen (Höpplerviskosität bestimmt nach DIN 53015).

In den erfindungsgemäßen Verfahren werden während der Polymerisation keine Emulgatoren eingesetzt. Beispiele für Emulgatoren sind anionische oder nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtioriische Tenside wie Alkylpolyglykolether oder Alkylarylpolyglykolether mit 8 bis 40 Ethylenoxid-Einheiten.

Die Polymerisationstemperatur beträgt im Allgemeinen 40°C bis 95°C, bevorzugt 45°C bis 90°C, insbesondere 45°C bis 75°C, und im Speziellen 45°C bis 55°C.

Die Initiierung der Polymerisation erfolgt mit den für die Emulsionspolymerisation gebräuchlichen Initiatoren, beispielsweise Oxidationsmitteln oder insbesondere Redox-Initiator-Kombinationen. Dabei werden Verbindungen unterschieden, welche oxidative und solche, die reduktive Eigenschaften haben; bekanntlich spricht man von Oxidationsmitteln einerseits und Reduktionsmitteln andererseits.

Beispiele für geeignete Oxidationsmittel sind t-Butylhydroperoxid, Kaliumperoxodiphosphat, t-Butylperoxopivalat, Cumolhydroperoxid, Isopropylbenzolmonohydroperoxid, Azobisisobutyronitril und insbesondere Natrium-, Kalium- und Ammoniumsalze der Peroxodischwefelsäure (Persulfate), Wasserstoffperoxid, t-Butylperoxid.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumformaldehydsulfoxylat (SFS) und (Iso-) Ascorbinsäure sowie Weinsäure. Bevorzugt werden (Iso-)Ascorbinsäure und deren Salze, wie z.B. Na-Isoascorbat, und Weinsäure.

Es ist bevorzugt, keine Formaldehydabspaltenden Agenzien einzusetzen; insbesondere wird der Einsatz von Natriumformaldehydsulfoxylat (SFS) in den erfindungsgemäßen Verfahren ausgeschlossen.

Die Initiatoren werden im Allgemeinen in einer Menge von 0,05 bis 3 Gew.-%, bezogen auf das Gesamtgewicht der Monomere, eingesetzt. Insbesondere werden während der Polymerisationsreaktion Oxidationsmittel in einer Menge von 0,04 bis 1,5, bevorzugt von 0,1 bis 1,0 bzw. von 0,1 bis 0,5 Gew.-%, bezogen auf das Gesamtgewicht der Monomere eingesetzt. Insbesondere werden während der Polymerisationsreaktion Reduktionsmittel in einer Menge von 0 bis 1,5, bevorzugt von 0,1 bis 1,0 bzw. von 0,1 bis 0,5 Gew.-%, bezogen auf das Gesamtgewicht der Monomere eingesetzt.

Die Radikalbildung kann thermisch unter alleinigem Einsatz von Oxidationsmitteln, bevorzugt von Persulfaten, oder durch Redox-Initiator-Kombinationen erfolgen. Unter den Redoxkombinationen ist beispielsweise bevorzugt der Einsatz von Persulfaten oder von t-Butylhydroperoxid und Ascorbinsäure oder Na-Isoascorbat, der Einsatz von Wasserstoffperoxid und Ascorbinsäure oder Na-Isoascorbat oder Weinsäure. Im Falle des Einsatzes von Redoxkombinationen kann es vorteilhaft sein, katalytische Mengen von Übergangsmetallverbindungen einzusetzen, beispielsweise Eisenammonsulfat oder Kupfersulfat. In Spezialfällen kann es vorteilhaft sein, auf den Einsatz der genannten Übergangsmetallverbindungen zu verzichten.

Initiatoren werden im Allgemeinen als wässrige Lösungen zudosiert. Es ist möglich, einen Teil an Initiatoren, insbesondere Reduktionsmittel in die Reaktorvorlage zu geben. Eine derartige Zugabe von Reduktionsmittel markiert nicht den Beginn der Zudosierung von Initiator. Bei Einsatz von Redox-Initiator-Kombinationen markiert die Zugabe von Oxidationsmittel der Beginn der Zudosierung von Initiator.

Die Zudosierung der Initiatorlösungen erfolgt in der Regel örtlich getrennt voneinander. Die Zudosierung kann mit konstanten Raten oder mit zeitlich variierenden Raten erfolgen. Beispielsweise kann zu Beginn eine höhere Rate vorgesehen werden um die Reaktion zu starten als im weiteren Verlauf der Reaktion. In der Regel werden die Initiatordosierungen fortgesetzt nachdem alle eingesetzten Monomere zudosiert worden sind. In dieser Phase der Auspolymerisation können die Dosierraten und/oder die Konzentrationen der Initiatordosierungen beispielsweise erhöht werden. Sofern eine Redoxinitiierung angewendet wird, was bevorzugt ist, werden die Konzentrationen und/oder die Dosierraten an Oxidationsmittel und Reduktionsmittel so abgestimmt, dass zumindest mit Beendigung der Initiatordosierungen ein molares Verhältnis von Reduktionsmittel zu Oxidationsmittel im Bereich von 0,2 zu 1, vorzugsweise im Bereich 0,5 zu 1 realisiert ist. Es kann jedoch hilfreich sein in einzelnen Phasen der Reaktion von diesem Verhältnis abzuweichen und mit einem Verhältnis von 2:1 oder von 1:1 zu arbeiten.

Zur Herstellung von Polymeren mit gewichtsmittleren Partikelgrößen von kleiner 500 nm sind Persulfate bevorzugt; für gewichtsmittlere Partikelgrößen von größer 600 nm ist t-Butylhydroperoxid als Oxidationsmittel bevorzugt.

Während der Polymerisation wird die Reaktionsmischung im Allgemeinen durch Rühraggregate durchmischt, um eine möglichst homogene Verteilung der Komponenten und eine Abfuhr an Reaktionswärme zu gewährleisten.

Im Allgemeinen wird der pH-Wert während der Reaktion auf Werte zwischen 2 und 8, bevorzugt zwischen 3 und 6 eingestellt. Im Einzelfalle kann es günstig sein, den pH-Wert zwischen 3,5 und 6 oder zwischen 4 und 6, oder auch zwischen 4,5 und 5,5 zu halten. Der pH-Wert der erhaltenen Dispersion wird meist auf Werte zwischen 4 und 6, insbesondere zwischen 4 und 5 eingestellt. Die pH-Einstellung oder Regelung des pH-Wertes kann mit Säuren, wie Schwefelsäure, Ameisensäure, Essigsäure; oder mit Basen, wie Ammoniak, Natronlauge, Kalilauge, Aminen; oder durch Verwendung von Puffersubstanzen, wie Alkaliacetat, Alkalicarbonat, Alkalidiphosphaten erfolgen.

Im Allgemeinen wird in den erfindungsgemäßen Verfahren so vorgegangen, dass eine wässrige Vorlage, enthaltend vorzugsweise Polyvinylalkohol als Schutzkolloid in einer Konzentration (C) im Reaktor vorgelegt und auf eine gewünschte Temperatur aufgeheizt wird; ein Teil an Ethylen, falls Ethylen als Monomer verwendet wird, z.B. wenigstens 20 Gew.-%, bevorzugt wenigstens 50 Gew.-% vom gesamten Ethylen, wird vor bzw. während des Aufheizens aufgedrückt. Bei der gewünschten Temperatur, beispielsweise bei 50°C, wird mit der parallelen Dosierung von Oxidationsmittel und Reduktionsmittel begonnen und kurzzeitig danach mit der Dosierung von Vinylester, gegebenenfalls im Gemisch mit weiteren Monomeren oder Hilfsmonomeren. Wasserlösliche Hilfsmonomere werden dabei beispielsweise in einer wässrigen Dosierung, parallel oder zeitlich versetzt zum Vinylester dosiert. Im Falle des Einsatzes von Ethylen werden nicht vorgelegte Ethylenanteile im Verlaufe der Dosierphase von Vinylester ebenfalls hinzugefügt, beispielsweise bei einem konstanten Druck oder mit einer gewählten Masseflussrate. Im Verlaufe der Dosierphase wird die Temperatur beispielsweise möglichst konstant gehalten, es ist jedoch auch möglich die Temperatur nach einem beliebigen Regime zu erhöhen. Nach Abschluss der Dosierungen von Vinylester, sonstigem Monomer oder Hilfsmonomer, werden die Initiatordosierungen fortgeführt bis zu vollständigem Monomerumsatz, wenigstens jedoch bis der Gehalt an nicht umgesetztem Vinylester kleiner als 2 Gew.-%, bevorzugt kleiner als 1 Gew.-% bezogen auf das Gesamtgewicht an Dispersion abgenommen hat. Die Entfernung dieses Anteils an Restmonomer erfolgt beispielsweise durch Nachpolymerisation mit in der Regel konzentrierteren Lösungen an Oxidations- und Reduktionsmittel und/oder durch bekanntes Dampfstrippen.

Den so erhaltenen Dispersionen können weitere Zusatzstoffe hinzugefügt werden, wie beispielsweise weitere Schutzkolloide, Emulgatoren, Biozide, Füllstoffe und Pigmente, Filmbildehilfsmittel, Netzmittel, Viskositätsstellmittel oder Harnstoff. Beispielsweise werden Dispersionen, die als Holzklebstoffe Anwendung finden sollen, in der Regel Filmbildehilfsmittel, vorzugsweise Butylcarbitolacetat und/oder Propylencarbonat, zugesetzt.

Überraschender Weise ermöglichen die erfindungsgemäßen Verfahren, Vinylesterpolymere mit Partikelgrößen Dw im Bereich von 120 nm bis 1.500 nm mit geringer Polydispersität PD von < 1.6 herzustellen. Überraschender Weise ermöglichen erfindungsgemäße Verfahren darüber hinaus, gezielt Vinylesterpolymere mit bestimmten Partikelgrößen Dw aus dem Bereich von 120 nm bis 1.500 nm zielgerichtet und zugleich sogar mit geringer Polydispersität PD von < 1.6 herzustellen. Die erfindungsgemäßen Verfahren erlauben es also, Vinylesterpolymere mit beliebigen der erfindungsgemäßen gewichtsmittleren Partikeldurchmessern gezielt herzustellen. Dabei gelingt es, im Anschluss an eine "Partikelbildungsphase", die zur Herausbildung einer gewissen Partikelanzahl führt, sowohl Partikelaggregationen als auch Partikelneubildung im weiteren Polymerisationsablauf weitgehend, wenn nicht gar vollständig, zu unterdrücken. Dies ist ein Grund für die geringe Polydispersität PD der erfindungsgemäßen Vinylesterpolymere. Die in erfindungsgemäßen Verfahren erhaltenen Polymere liegen also vorteilhafterweise als sphärische Teilchen in einem nicht flockulierten Zustand vor. Überraschend werden in erfindungsgemäßen Verfahren Partikelaggregationsprozesse, beispielsweise wenn die Teilchenbildungsphase abgeschlossen ist, weitgehend, wenn nicht vollständig vermieden, was Voraussetzung zur Erzielung einer geringen Polydispersität von PD < 1,6 ist. Für all dies hat sich die Konzentration (C) an Schutzkolloid in der wässrigen Reaktorvorlage als essentiell und auch die Anfängliche Zugaberate (VZ) an Schutzkolloid als nützlich erwiesen. Die "Partikelbildungsphase" ist ein relativ zur Dauer der gesamten Polymerisation kurzer Zeitabschnitt zu Beginn der Polymerisationsreaktion, in dem Polymerpartikel (mature latex particles) entstehen, deren Anzahl in den erfindungsgemäßen Verfahren im weiteren Polymerisationsverlauf weitgehend konstant bleibt, und deren Größe vorwiegend, wenn nicht ausschließlich, durch weiteren Umsatz von Monomer zu Polymer auf die nach Abschluss der Polymerisation erhaltenen Partikeldurchmesser Dw, bzw. Dn mit einer Polydispersität PD zunimmt.

Besonders überraschend war auch, dass nunmehr auch Vinylesterpolymerisate in Form von Schutzkolloidstabilisierten Dispersionen mit gewichtsmittleren Partikelgrößen Dw deutlich unterhalb von einem Mikrometer, insbesondere mit gewichtsmittleren Teilchengrößen Dw < 700 nm, oder Dw < 500 nm, oder Dw <.400 nm mit geringen Polydispersitäten PD von PD < 1,6 oder PD < 1.3 oder PD < 1,2 oder sogar PD < 1,15 zugänglich sind.

Die erfindungsgemäßen Verfahren ermöglichen es beispielsweise,' die Viskosität der erhaltenen Dispersionen sowohl durch die gewichtsmittleren Partikelgrößen Dw als auch durch die Zusammensetzung des Schutzkolloids, vorzugsweise durch den Einsatz von Polyvinylalkohol mit wählbaren gewichtsmittleren Polymerisationsgraden, einzustellen. Mit dem erfindungsgemäßen Verfahren gelingt es nun überraschenderweise auch, die Viskosität der Dispersion und eine gewichtsmittlere Partikelgröße Dw unabhängig voneinander einzustellen.

Werden dagegen höhere als die erfindungsgemäßen Konzentrationen an Schutzkolloid (C) in der wässrigen Vorlage eingesetzt, so werden entweder feine Partikelfraktionen mit Volumenanteilen > 6 Vol.-% erhalten oder die Dispersion ist im Verlaufe der Polymerisation nicht mehr stabil, was z.B. zur Bildung hoher Anteile an Koagulat KOA bzw. Siebrückstand SR oder zur vollständigen Koagulation führen kann. Diese Aussagen sind besonders zutreffend, wenn die wässrigen Dispersionen mit erfindungsgemäßen Feststoffgehalten hergestellt werden.

Wird mit oder nach Start der Dosierung von einem oder mehreren Initiatoren im erfindungsgemäßen Zeitraum kein Schutzkolloid hinzugegeben, so können verstärkte Koagulatbildung auftreten und/oder es werden grobe Partikelfraktionen mit Volumenanteilen von mehr als 6 Vol-%, gebildet. Durch die erfindungsgemäße Schutzkolloidzudosierung mit Anfänglicher Zugaberate (VZ) kann hingegen der Bildung von Koagulat KOA und hoher Anteile an Siebrückstand SR entgegengewirkt und/oder grobe Partikelfraktionen mit Volumenanteilen von mehr als 6 Vol.-% vermieden und auf das Erhalten der erfindungsgemäßen Polydispersität PD vorteilhaft eingewirkt werden.

Werden Vinylester entgegen der erfindungsgemäßen Vorgehensweise zumindest teilweise vorgelegt, so ist dies zum einen der gezielten wahlweisen Einstellbarkeit der gewichtsmittleren Partikelgrößen Dw im Bereich von 120 nm bis 1.500 nm abträglich. Zum anderen können bei Teilvorlage an Vinylester grobe Partikelfraktionen mit Volumenanteilen > 6 Vol.-% entstehen.

Im Allgemeinen können die nach den erfindungsgemäßen Verfahren erhaltenen Dispersionen als Bindemittel, bzw. als Klebemittel oder in Form der aus den Dispersionen erhaltenen Pulver verwendet werden. Dabei kommt insbesondere ein Einsatz als Klebemittel für cellulosische Materialien, wie Papier, Pappe, Holz miteinander oder mit anderen Substraten in Betracht. Ein weiteres Verwendungsfeld ist die Bindung von Fasermaterialien, wie beispielsweise nichtgewebter Textilien. Die Dispersionen können auch in Formulierungen wasserverdünnbarer Farben Anwendung finden. Bevorzugte Anwendungen der Dispersionen sind in oder als Klebemittel für wasserfeste Holzverklebungen, insbesondere für solche, die der Beanspruchungsgruppe D3 und/oder D4 nach DIN EN204/205 genügen, oder als oder in wässrigen Bindemitteln zur Behandlung textiler Flächengebilde, insbesondere in Form eines Teppichs, der auf der von der Trittseite abgewandten Seite mit den nach vorgenannten Verfahren erhältlichen Produkten beschichtet oder teilimprägniert ist.

Die Schutzkolloid-stabilisierten Vinylesterpolymere in Form von in Wasser redispergierbaren Polymerpulvern sind durch Trocknen der obengenannten Dispersionen erhältlich. Das Trocknen kann hierbei mit dem Fachmann bekannten Verfahren erfolgen, beispielsweise durch Sprühtrocknung. Dafür kann es hilfreich sein, Trocknungshilfsmittel, beispielsweise eine Verdüsungshilfe, insbesondere die oben genannten Schutzkolloide, bevorzugt die oben genannten Polyvinylalkohole einzusetzen. Die redispergierbaren Dispersionspulver können in den dafür typischen Anwendungsbereichen eingesetzt werden, beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben und zur Betonmodifizierung.

Da es mit den erfindungsgemäßen Verfahren hier in überraschender Weise gelungen ist, Dispersionen mit wählbar einstellbaren gewichtsmittleren Partikelgrößen Dw bereit zu stellen, eignen sich die Verfahrensprodukte in hervorragender Weise für den Einsatz als "Saatlatex" in Verfahren der radikalischen Emulsionspolymerisation zur Herstellung hochfeststoffhaltiger Dispersionen mit Feststoffanteilen von > 60 Gew.-%, insbesondere von $\geq$ 65 Gew.-%, bezogen auf das Gesamtgewicht der Dispersion, mit Viskositäten von vorzugweise $\leq$ 30.000 mPas, bevorzugt $\leq$ 20.000 mPas und insbesondere von $\leq$ 10.000 mPas. Diese Dispersionen zeichnen sich durch hohe Polydispersität PD von im Allgemeinen PD > 1,6 aus. Hochfeststoffhaltige Schutzkolloid-stabilisierte Dispersionen finden beispielweise in oder als Klebemittel Anwendung. Als "Saatlatex" eingesetzte Verfahrensprodukte haben im Allgemeinen einen Feststoffgehalt von 30 bis 60 Gew.-%, bezogen auf das Gesamtgewicht des "Saatlatex", bevorzugt jedoch einen Feststoffgehalt von mindestens 45 Gew.-%. Bei der Herstellung hochfeststoffhaltiger Dispersionen sind generell Maßnahmen zur Einstellung einer hinreichenden Kolloidstabilität und der Viskosität erforderlich. Im Allgemeinen wird eine hinreichende Fließfähigkeit hochfeststoffhaltiger Dispersionen durch Erzeugung sehr breiter und in der Regel mehrmodaler, z.B. bimodaler Partikelgrößenverteilung erreicht, wie beispielsweise in DE2837992, US5679735, EP0789035, DE3036696, DE3147008, DE10337183 oder DE10035589 beschrieben.

**Beispiele**

**1. Testmethoden für charakteristische Dispersionskennwerte**

**1.1 Feststoffgehalt / Trocknungsrückstand (FG)**

Zur Bestimmung des Feststoffgehaltes, in Gew.-% bezogen auf Dispersion, wurden nach Abschluss der Polymerisation etwa 0,3 g Polymerdispersion eingewogen und als dünner Film auf einer Aluminiumfolie für 30 Minuten bei 150°C im Umlufttrockenschrank getrocknet. Der Trocknungsrückstand wurde, nach Abkühlen im Exsikkator über Silikagel, zurückgewogen und der Feststoffgehalt FG in Gew.-%, bezogen auf Dispersion, aus Rückstand und Einwaage berechnet.

**1.2 Viskosität (Bf20)**

Die Viskosität der Dispersion wurde nach Temperierung auf 23°C mit einem Brookfield-Viskosimeter nach Gerätevorschrift bei 20 UPM, vermessen. Die dabei verwendeten Spindeln sind für die Beispiele bzw. Vergleichsbeispiele jeweils aufgeführt. Die Viskosität wird in mPas angegeben.

**1.3 Charakterisierung der Partikelgrößen**

Zur Ermittlung einer Partikelgrößenverteilung mit dem Messgerät LS13320 der Firma Beckmann Coulter® Inc. nach Gerätevorschrift, unter Verwendung der Stoffkonstanten für Polyvinylacetat, mit dem optischen Modell PVAC.RF780D, wurde die Dispersion hinreichend mit Wasser verdünnt. Koagulat, KOA, und grobpartikuläre Anteile, SR, deren Bestimmung im Punkt 1.4 beschrieben wird, wurden zuvor mittels 40 $\mu$m Siebgewebe abgetrennt, da diese das Analysenergebnis verfälschen können. Zur Herstellung der Messverdünnungen, wurde zunächst unter Rühren tropfenweise Wasser zu den konzentrierten Dispersionen hinzugefügt und auf Konzentrationen von 10 bis 25 Gew.-% Feststoffgehalt verdünnt. Diese verdünnten Dispersionen wurden zur Herstellung der Messlösungen hinreichender Verdünnung benutzt.
Zur quantitativen Charakterisierung der Dispersität oder Partikelgröße wurden der gewichtsmittlere Partikeldurchmesser Dw, der zahlenmittlere Partikeldurchmesser Dn und der Zentralwert, auch als Medianwert bekannt, der Volumenverteilung, D3,50, die als Analysenergebnisse der Messungen mit dem LS13320 ausgewiesenen Werte herangezogen.
Als Analysenergebnisse werden durch das Gerät LS13320 auch Daten für die Volumenhäufigkeitsverteilung als tabellarische Werte von Volumenanteilen an Partikeln definierter Partikeldurchmesser in Abhängigkeit vom Partikeldurchmesser geliefert, wobei die Summe aller Volumenanteile für alle definierten Partikeldurchmesser 100 Volumenprozent beträgt. Diese Daten werden unter Beachtung der dem Fachmann geläufigen Grundsätze zur Darstellung der weiter unten aufgeführten Abbildungen benutzt.

**1.4 Koagulat, KOA, und Siebrückstand, SR**

Die Dispersionen wurden zunächst über ein 1 mm Sieb grob filtriert. Der auf dem Sieb verbliebene grobe Koagulatrückstand wurde getrocknet und ausgewogen. Seine Menge wird auf die eingesetzte Gesamtmenge an Monomeren bezogen und als KOA in Gew.-% angegeben.
Ein verbliebener Rückstand der Dispersion angegeben in Teilen pro $10^6$, bezogen auf Dispersion (ppm), charakterisiert grobpartikuläre Anteile in der Dispersion mit Abmessungen größer 40 $\mu$m. Zur Bestimmung solcher minimal zu haltender Anteile wurden 100 Gramm der Dispersion mit einem Liter destilliertem Wasser verdünnt, anschließend durch ein Nylon-Siebgewebe mit 150 $\mu$m Maschenweite gegossen, und der Durchgang durch ein Siebgewebe der Maschenweite von 40 $\mu$m filtriert. Es wurde jeweils mit Wasser solange gespült bis der Durchgang klar war. Der Rückstand auf den Siebgeweben wurde nach Trocknung zurückgewogen und der Siebrückstand pro Siebgewebe, bezogen auf Dispersion, berechnet. Es wird hier der Gesamtrückstand auf beiden Sieben größer 40 $\mu$m als SR angegeben.

**2. Allgemeine Polymerisationsvorschriften**

**3-Liter Glasreaktor**

Für alle Polymerisationen, mit Ausnahme der Druckpolymerisationen für die Beispiele 26 und 27, wurde ein doppelwandiger 3-Liter Glasreaktor, ausgerüstet mit elektronischer Temperaturmessung und -Regelung, einem Rückflusskühler und wenigstens vier Dosiermöglichkeiten für parallele Dosierung von zwei Initiatorkomponenten (Dosierung 1 für das Oxidationsmittel und Dosierung 2 für das Reduktionsmittel, sofern verwendet), Monomer bzw. Monomergemisch (Dosierung 3) und eine wässrige Lösung (Dosierung 4), enthaltend Polyvinylalkohol und gegebenenfalls wasserlösliche Hilfsmonomere.

Zur Rührung wurde ein Fingerrührer mit 6 Fingern verwendet, die Drehzahl war variierbar und betrug, wenn nicht anders angegeben, im gesamten Polymerisationsverlauf 150 UPM.

Nach Zugabe des wässrigen Teils der Reaktorvorlage, enthaltend Polyvinylalkohol definierter Konzentration (C), eingestellt auf einen jeweils definierten pH-Wert, und in der Regel enthaltend definierte Mengen an Eisenammonsulfat (FAS), wurde der Reaktor evakuiert, das Vakuum mit Stickstoff gebrochen und für mindestens 5 Minuten Stickstoff durch den Reaktor geleitet. Anschließend wurde auf Solltemperatur temperiert und bei Solltemperatur mit in der Regel paralleler Zugabe der wässrigen Dosierungen 1, enthaltend das Oxidationsmittel und Dosierung 2, enthaltend das Reduktionsmittel, oder nur von Dosierung 1, begonnen. Die Dosierungen 1 und 2 wurden, sofern nicht anders angegeben, mit konstanten Raten von 20 ml/h zudosiert. Wenn nicht anders angegeben, wurden die Dosierraten der Dosierungen 1 und 2 im Verlaufe der Polymerisation nicht verändert. Spätestens 5 Minuten nach Starten der Dosierungen 1 und 2 wurde die Dosierung 3, enthaltend Monomer, gestartet, deren Dosierrate, wenn nicht anders angegeben, für die gesamte Dosierzeit von in der Regel 180 Minuten konstant gehalten wurde. Gleichzeitig mit Start der Dosierung 3 wurde, wenn nicht anders angegeben, die Dosierung 4, enthaltend den zudosierten Polyvinylalkohol, gestartet und parallel zur Dosierung 3, wenn nicht anders angegeben mit konstanter Rate, dem Reaktor hinzugefügt. In einigen Fällen wurde die Dosierung 4 nach Ablauf von 5 Minuten nach Beginn der Dosierung 3 gestartet.

Die Dosierungen 3 und 4 wurden in der Regel gleichzeitig beendet. Die Dosierungen 1 und 2 liefen noch für einen Zeitraum zwischen 15 und 55 Minuten nach Ende der Dosierungen 3 und 4.

Anschließend wurde der Reaktorinhalt abgekühlt.

Nach Abkühlen des Reaktorinhalts wurde dieser mit einer 10 Gew.-%igen wässrigen Lösung von Natronlauge auf einen vorgegebenen SollpH-Wert, wenn nicht anders angegeben, von 4,5 eingestellt.

Die Analysendaten nach Punkt 1.1 bis 1.4 wurden ermittelt und sind in den Tabellen 2 und 3 aufgeführt. Für die Viskositätsmessung nach Punkt 1.2 wurde, sofern nicht anders angegeben, Spindel 2 verwendet.

**Druckreaktoren**

Die Polymerisationen für die Beispiele 26 und 27 wurden in üblichen Druckreaktoren mit Reaktorvolumina von 17 Liter (Beispiel 27) bzw. 600 Liter (Beispiel 26)durchgeführt, ausgerüstet mit elektronischer Temperaturmessung und -Regelung, einem mehrstufigen Paddelrührer mit variierbarer Drehzahl, Sicherheitsventil und Dosiermöglichkeiten für mindestens fünf Dosierungen für parallele Dosierung von zwei Initiatorkomponenten (Dosierung 1 für das Oxidationsmittel und Dosierung 2 für das Reduktionsmittel), Monomer bzw. Monomergemisch (Dosierung 3) und eine wässrige Lösung, enthaltend Polyvinylalkohol, (Dosierung 4) sowie für Ethylen (Dosierung 5, sofern angewendet).

Der Ablauf entsprach den Angaben für den 3 Liter Glasreaktor, jedoch wurde das anfänglich angelegte Vakuum mit Vorlage einer definierten Menge an Ethylen gebrochen. Die Drehzahl war variierbar einstellbar und betrug 200 UPM für Beispiel 26, bzw. 350 UPM für Beispiel 27.

**3. Rohstoffe**

Alle eingesetzten Rohstoffe waren technische Produkte, in üblichen technischen Reinheitsgraden kommerzieller Marktprodukte, die keiner speziellen Vorbehandlung unterzogen wurden. Als "Wasser" wurde durch Ionenaustausch entsalztes Wasser eingesetzt. Die eingesetzten Schutzkolloide waren Polyvinylalkohole, die in Tabelle 1 aufgeführt und charakterisiert werden. Neben Vinylacetat (VAC) kamen folgende Monomere zum Einsatz: Vinyllaurat (VL), Versaticsäurevinylester VeoVa®9, Ethylen (Eth); Butylacrylat (BA), N-Methylolacrylamid (NMA) und Styrol. Als Oxidationsmittel wurden Natriumpersulfat (NaPS), Wasserstoffperoxid ($H_2O_2$) und t-Butylhydroperoxid (t-BHP) eingesetzt. Als Reduktionsmittel kamen Natriumisoascorbat (Na-iAsc), Weinsäure, Ascorbinsäure (AscSr) und (nur) für Vergleichsbeispiel V7 Natriumformaldehydsulfoxylat (SFS) zum Einsatz.

Tabelle 1: Charakteristika der eingesetzten Polyvinylalkohole (Polvviol, Mowiol und EXCEVAL sind geschützte Markennamen)

| PVOH Typ | Name | Viskosität (4%ige Lösung mPas) | mittlerer Hydrolyse grad [Mol%] | Besonderheiten |
|---|---|---|---|---|
| A | Polyviol M04/140 | 3,8 | 88,0 | S-PVOH |
| B | Polyviol M05/140 | 4,8 | 88,0 | S-PVOH |
| C | Mowiol 4/88 | 4,0 | 88,0 | S-PVOH |

(fortgesetzt)

| PVOH Typ | Name | Viskosität (4%ige Lösung mPas) | mittlerer Hydrolyse grad [Mol%] | Besonderheiten |
|---|---|---|---|---|
| D | Mowiol 8/88 | 8,0 | 88,0 | S-PVOH |
| E | Mowiol 18/88 | 18,0 | 88,0 | S-PVOH |
| F | Polviol (X-PVOH) | 4,5 | 88,0 | enthält 1 % VeoVa10 |
| G | EXCEVAL RS2117 | 26,5 | 98,3 | E-PVOH enthält Ethylen |
| H | EXCEVAL HR3010 | 14,0 | 99,2 | E-PVOH enthält Ethylen |
| I | Mowiol 6/98 | 6,0 | 98,4 | S-PVOH |
| J | Mowiol 30/98 | 29,0 | 98,4 | S-PVOH |

Die in Tabelle 1 aufgeführten Polyvinylalkohole wurden als wässrige Lösungen eingesetzt. Die Herstellung dieser wässrigen Lösungen von Polyvinylalkohol mit Konzentrationen zwischen 8 und 21 Gew.-% erfolgte unter Beachtung der dem Fachmann geläufigen Bedingungen; insbesondere wurden zu 88 Mol.-% verseifte Polyvinylalkohole mindestens 2 Stunden bei Temperaturen zwischen 80 und 85 °C und zu mehr als 88 Mol.-% verseifte Polyvinylalkohole mindestens 2 Stunden bei Temperaturen zwischen 90 und 95 °C gelöst. Die Lösungen wurden anschließend langsam innerhalb von 2 Stunden auf Raumtemperatur abgekühlt.

**Tabelle 2A: Stoffe und Mengen für die Beispiele 1 bis 32**

| 1 | 2 | 3 | 4 | 5 | 6 | 7 |
|---|---|---|---|---|---|---|
| Bsp Nr. | Monomer | D0S1 | D0S2 | Vorlage Menge Gramm | Gew.-% Anteil Vorlage bez auf EndDisp | Temp Grad C |
| 1 | VAC | NaPS | Na-iAsc | 300 | 29 | 50 |
| 2 | VAC | NaPS | Na-iAsc | 300 | 20 | 50 |
| 3 | VAC | NaPS | Na-iAsc | 366 | 20 | 50 |
| 4 | VAC | H2O2 | Na-iAsc | 366 | 20 | 50 |
| 5 | VAC | tBHP | Na-iAsc | 366 | 20 | 50 |
| 6 | VAC | H2O2 | Na-iAsc | 334 | 19 | 50 |
| 7 | VAC | tBHP | Na-iAsc | 334 | 19 | 50 |
| 8 | VAC | tBHP | Na-iAsc | 318 | 18 | 50 |
| 9 | VAC | NaPS | Na-iAsc | 302 | 17 | 50 |
| 10 | VAC | tBHP | Na-iAsc | 300 | 17 | 50 |
| 11 | VAC | tBHP | Na-iAsc | 302 | 17 | 50 |
| 12 | VAC | tBHP | Na-iAsc | 302 | 14 | 50 |
| 13 | VAC | tBHP | Na-iAsc | 302 | 17 | 50 |
| 14 | VAC | tBHP | Na-iAsc | 300 | 17 | 50 |
| 15 | VAC | NaPS | Na-iAsc | 366 | 20 | 50 |
| 16 | VAC | NaPS | Na-iAsc | 366 | 20 | 50 |
| 17 | VAC | NaPS | Na-iAsc | 366 | 20 | 50 |
| 18 | VAC | NaPS | Na-iAsc | 480 | 27 | 50 |
| 19 | VAC | NaPS | Na-iAsc | 252 | 14 | 50 |
| 20 | VAC | H2O2 | Weinsr | 333 | 20 | 70 |

(fortgesetzt)

| 1 | 2 | 3 | 4 | 5 | 6 | 7 |
|---|---|---|---|---|---|---|
| Bsp Nr. | Monomer | D0S1 | D0S2 | Vorlage Menge Gramm | Gew.-% Anteil Vorlage bez auf EndDisp | Temp Grad C |
| 21 | VAC | NaPS | Na-iAsc | 333 | 19 | 70 |
| 22 | VAC | tBHP | Na-iAsc | 302 | 14 | 50 |
| 23 | VAC | tBHP | Na-iAsc | 302 | 14 | 50 |
| 24 | VAC | H2O2 | Weinsr | 308 | 17 | 83 |
| 25 | VAC | H2O2 | Weinsr | 302 | 17 | 83 |
| 26 | VAC/Eth | tBHP | AscSr | 94.440 | 17 | 70 |
| 27 | VAC/VL/Eth | tBHP | AscSr | 3.450 | 20 | 70 |
| 28 | VAC/VL | NaPS | Na-iAsc | 334 | 20 | 50 |
| 29 | VAC/BA | NaPS | Na-iAsc | 302 | 17 | 50 |
| 30 | VAC/VeoVa9 | H2O2 | Weinsr | 308 | 16 | 83 |
| 31 | VAC/VeoVa9/NMA | H2O2 | Weinsr | 308 | 16 | 83 |
| 32 | VAC/VeoVa9/NMA | H2O2 | Weinsr | 308 | 16 | 83 |

In Tabelle 2 werden die eingesetzten Rohstoffe, also die Monomere (mit den eben genannten Abkürzungen), die Oxidationsmittel (Dosierung 1) und die Reduktionsmittel (Dosierung 2) aufgeführt. Außerdem werden in Tabelle 2 aufgeführt: Die Menge an wässriger Vorlage in Gramm und deren Anteil in Gew.-% am Gesamtgewicht aller eingesetzten Rohstoffe sowie die Polymerisationstemperatur.

**Tabelle 2B: Stoffe und Mengen für die Vergleichsbeispiele V1 bis V7 und das Verwendungsbeispiel VWB**

| 1 | 2 | 3 | 4 | 5 | 6 | 7 |
|---|---|---|---|---|---|---|
| Bsp Nr. | Monomer | D0S1 | D0S2 | Vorlage Menge Gramm | % Anteil Vorlage bez auf EndDisp | Temp Grad C |
| V1 | VAC | H2O2 | ohne | 1.059 | 49 | 83 |
| V2 | VAC/NMA | H2O2 | ohne | 1.116 | 51 | 83 |
| V3 | VAC/VeoVa9/NMA | H2O2 | Weinsr | 1.055 | 54 | 83 |
| V4 | VAC | H2O2 | ohne | 1.116 | 51 | 83 |
| V5 | VAC/NMA | H2O2 | ohne | 1.116 | 51 | 83 |
| V6 | VAC | tBHP | Na-iAsc | 578 | 32 | 50 |
| V7 | Styrol/BA | tBHP | SFS | 300 | 17 | 80 |
| VWB | VAC | tBHP | Na-iAsc | 255 | 10 | 50 |

Legende zu den Tabellen 2A und 2B
Spalte 1: Nr. der Beispiele 1 bis 32; bzw. der Vergleichsbeispiele V1 bis V7; VWB steht für Verwendungsbeispiel,
Spalte 2: Eingesetzte Monomere,
Spalte 3: Oxidationsmittel in Dosierung 1 (Dos 1),
Spalte 4: Reduktionsmittel in Dosierung 2 (Dos 2),
Spalte 5: Menge der wässrigen Vorlage, enthaltend Polyvinylalkohol in der Konzentration (C) in Gramm,
Spalte 6: Anteil des Gewichts der wässrigen Vorlage bezogen auf das Gesamtgewicht aller im Verfahren eingesetzten Rohstoffe, d.h. bezogen auf das Gewicht der Dispersion in Gew.-%,
Spalte 7: Polymerisationstemperatur in Grad Celsius.

## 4. Erfindungsgemäße Beispiele

**Beispiel 1**

Es wurden 300 Gramm einer wässrigen Mischung, enthaltend 85,1 Gramm pro Liter Wasser an Polyvinylalkohol Typ A und 0,07 Gramm pro Liter Eisenammonsulfat, im Reaktor vorgelegt. Bei Solltemperatur von 50 °C wurden die Dosierungen 1 und 2 gestartet. Dosierung 1 war eine 4,5 Gew.-%ige wässrige Lösung von Natriumpersulfat; Dosierung 2 war eine 3,5 Gew.-%ige wässrige Lösung von Natriumisoascorbat. Die Dosierung 3 bestand aus 298 Gramm Vinylacetat und wurde in 66 Minuten vollständig dosiert. Die Dosierung 4 bestand aus 353 Gramm Wasser und 32 Gramm einer 20 Gew.-%igen wässrigen Lösung von Polyvinylalkohol Typ A und wurde im gleichen Zeitraum von 66 Minuten dosiert. Die Dosierungen 1 und 2 wurden beendet nachdem jeweils 35 ml von Dosierung 1 und Dosierung 2 dem Reaktor zugefügt waren.

**Beispiel 2**

Wie Beispiel 1, aber Dosierung 3 bestand aus 614 Gramm Vinylacetat und wurde in 136 Minuten vollständig dosiert und Dosierung 4 bestand aus 236 Gramm Wasser und 230 Gramm einer 20 Gew.-%igen wässrigen Lösung von Polyvinylalkohol Typ A und wurde im gleichen Zeitraum von 136 Minuten dosiert. Die Dosierungen 1 und 2 wurden beendet nachdem jeweils 55 ml von Dosierung 1 und Dosierung 2 dem Reaktor zugefügt waren.

**Beispiel 3**

Wie Beispiel 1, aber es wurden 366 Gramm einer wässrigen Mischung, enthaltend 36,2 Gramm pro Liter Wasser an Polyvinylalkohol Typ A und 0,06 Gramm pro Liter Eisenammonsulfat, im Reaktor vorgelegt; Dosierung 3 bestand aus 814 Gramm Vinylacetat und wurde in 180 Minuten vollständig mit konstanter Rate dosiert; Dosierung 4 bestand aus 95 Gramm Wasser und 347 Gramm einer 20 Gew.-%igen wässrigen Lösung von Polyvinylalkohol Typ A und wurde im gleichen Zeitraum von 180 Minuten dosiert. Die Dosierungen 1 und 2 wurden beendet nachdem jeweils 83 ml von Dosierung 1 und Dosierung 2 dem Reaktor zugefügt waren.

**Beispiel 4**

Wie Beispiel 3, Dosierung 1 war eine 2,0 Gew.-%ige wässrige Lösung von Wasserstoffperoxid. Die Dosierungen 1 und 2 wurden beendet nachdem jeweils 83 ml von Dosierung 1 und Dosierung 2 dem Reaktor zugefügt waren.

**Beispiel 5**

Wie Beispiel 3, aber Dosierung 1 war eine 1,7 Gew.-%ige wässrige Lösung von t-Butylhydroperoxid. Die Dosierungen 1 und 2 wurden beendet nachdem jeweils 83 ml von Dosierung 1 und Dosierung 2 dem Reaktor zugefügt waren.

**Beispiel 6**

Wie Beispiel 3, aber es wurden 334 Gramm einer wässrigen Mischung, enthaltend 19,5 Gramm pro Liter Wasser an Polyvinylalkohol Typ A im Reaktor vorgelegt; Dosierung 1 war eine 2,0 Gew.-%ige wässrige Lösung von Wasserstoffperoxid und Dosierung 4 bestand aus 95 Gramm Wasser und 379 Gramm einer 20 Gew.-%igen wässrigen Lösung von Polyvinylalkohol Typ A. Die Dosierungen 1 und 2 wurden beendet nachdem jeweils 87 ml von Dosierung 1 und Dosierung 2 dem Reaktor zugefügt waren.

**Beispiel 7**

Wie Beispiel 6, aber Dosierung 1 war eine 1,7 Gew.-%ige wässrige Lösung von t-Butylhydroperoxid. Die Dosierungen 1 und 2 wurden beendet nachdem jeweils 80 ml von Dosierung 1 und Dosierung 2 dem Reaktor zugefügt waren.

**Beispiel 8**

Wie Beispiel 7, aber es wurden 318 Gramm einer wässrigen Mischung, enthaltend 10,2 Gramm pro Liter Wasser an Polyvinylalkohol Typ A im Reaktor vorgelegt und Dosierung 4 bestand aus 95 Gramm Wasser und 395 Gramm einer 20 Gew.-%igen wässrigen Lösung von Polyvinylalkohol Typ A. Die Dosierungen 1 und 2 wurden beendet nachdem jeweils 79 ml von Dosierung 1 und Dosierung 2 dem Reaktor zugefügt waren.

**Beispiel 9**

Es wurde wie für Beispiel 3 verfahren, aber es wurden 302 Gramm einer wässrigen Mischung, enthaltend 0,06 Gramm pro Liter Eisenammonsulfat, im Reaktor vorgelegt; gleichzeitig mit Dosierung 3 wurde Dosierung 4, bestehend aus 95 Gramm Wasser und 411 Gramm einer 20 Gew.-%igen wässrigen Lösung von Polyvinylalkohol Typ A, mit einer Dosierrate von 334,6 Gramm pro Stunde gestartet. 15 Minuten später wurde die Zugaberate reduziert und die verbleibende Menge an Dosierung 4 über einen Zeitraum von 165 Minuten mit konstanter Rate zudosiert. Die Dosierungen 1 und 2 wurden beendet nachdem jeweils 81 ml von Dosierung 1 und Dosierung 2 dem Reaktor zugefügt waren.

**Beispiel 10**

Es wurden 300 Gramm einer wässrigen Mischung, enthaltend 5,0 Gramm pro Liter Wasser an Polyvinylalkohol Typ A und 0,06 Gramm pro Liter Eisenammonsulfat, im Reaktor vorgelegt. Bei Solltemperatur von 50 °C wurden die Dosierungen 1 und 2 mit einer Rate von 20 ml/h gestartet; diese Rate wurde im Weiteren nicht verändert. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, gestartet und die Gesamtmenge in 180 Minuten vollständig mit konstanter Rate dosiert. 5 Minuten nach Starten von Dosierung 3 wurde Dosierung 4, bestehend aus 124 Gramm Wasser und 400 Gramm einer 20 Gew.-%igen wässrigen Lösung von Polyvinylalkohol Typ A, gestartet und die Gesamtmenge an Dosierung 4 über einen Zeitraum von 175 Minuten gleichmäßig zudosiert. Die Dosierungen 1 und 2 wurden beendet nachdem jeweils 66 ml von Dosierung 1 und Dosierung 2 dem Reaktor zugefügt waren.

**Beispiel 11**

Wie Beispiel 9, aber 5 Minuten nach Starten von Dosierung 3 wurde Dosierung 4 mit einer Rate von 245,5 Gramm/h gestartet. 15 Minuten später wurde diese Dosierrate reduziert und die verbleibende Menge an Dosierung 4 über einen Zeitraum von 165 Minuten gleichmäßig zudosiert. Die Dosierungen 1 und 2 wurden beendet nachdem jeweils 82,5 ml von Dosierung 1 und Dosierung 2 dem Reaktor zugefügt waren.

**Beispiel 12**

Es wurden 302 Gramm einer wässrigen Mischung, enthaltend 0,06 Gramm pro Liter Eisenammonsulfat, im Reaktor vorgelegt. Bei Solltemperatur von 50 °C wurden die Dosierungen 1 und 2 mit einer Rate von 20 ml/h gestartet; diese Rate wurde im Weiteren nicht verändert. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde die Dosierung 3, bestehend aus 1254 Gramm Vinylacetat, gestartet und die Gesamtmenge in 180 Minuten vollständig mit konstanter Rate dosiert. Gleichzeitig mit Dosierung 3 wurde Dosierung 4, bestehend aus 95 Gramm Wasser und 411 Gramm einer 20 Gew.-%igen wässrigen Lösung von Polyvinylalkohol Typ A, mit einer Rate von 211,9 Gramm/h gestartet. 15 Minuten später wurde diese Dosierrate reduziert und die verbleibende Menge an Dosierung 4 über einen Zeitraum von 165 Minuten gleichmäßig zudosiert. Die Dosierungen 1 und 2 wurden beendet nachdem jeweils 80 ml von Dosierung 1 und Dosierung 2 dem Reaktor zugefügt waren.
Für die Viskositätsmessung nach Punkt 1.2 wurde Spindel 6 verwendet.

**Beispiel 13**

Es wurden 302 Gramm einer wässrigen Mischung, enthaltend 0,06 Gramm pro Liter Eisenammonsulfat, im Reaktor vorgelegt. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, gestartet und die Gesamtmenge in 180 Minuten vollständig mit konstanter Rate dosiert. Gleichzeitig mit Dosierung 3 wurde Dosierung 4, bestehend aus 95 Gramm Wasser und 411 Gramm einer 20 Gew.-%igen wässrigen Lösung von Polyvinylalkohol Typ A, mit einer Rate von 147,7 Gramm/h gestartet. 15 Minuten später wurde diese Dosierrate reduziert und die verbleibende Menge an Dosierung 4 über einen Zeitraum von 165 Minuten gleichmäßig zudosiert. Die Dosierungen 1 und 2 wurden beendet nachdem jeweils 80 ml von Dosierung 1 und Dosierung 2 dem Reaktor zugefügt waren.

**Beispiel 14**

Es wurden 302 Gramm einer wässrigen Mischung, enthaltend 1,0 Gramm pro Liter Wasser an Polyvinylalkohol Typ A und 0,06 Gramm pro Liter Eisenammonsulfat, im Reaktor vorgelegt. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, gestartet und die Gesamtmenge in 180 Minuten vollständig mit konstanter Rate dosiert. 5 Minuten nach Start der Dosierung 3 wurde Dosierung 4, bestehend aus 118 Gramm Wasser und 406 Gramm einer 20 Gew.-%igen wässrigen Lösung von Polyvinylalkohol Typ A, mit einer Rate von 116 Gramm/h gestartet. 15 Minuten später wurde diese Dosierrate reduziert und die verbleibende Menge an Dosierung 4 über einen Zeitraum von 150 Minuten gleichmäßig zudosiert. Die Dosierungen 1 und 2 wurden beendet nachdem jeweils 66 ml von Dosierung 1 und Dosierung 2 dem Reaktor zugefügt waren. Es wurde auf einen pH-Wert von 4,5 eingestellt. Für die Viskositätsmessung nach Punkt 1.2 wurde Spindel 2 verwendet.

**Beispiel 15**

Es wurden 366 Gramm einer wässrigen Mischung, enthaltend 36,2 Gramm pro Liter Wasser an Polyvinylalkohol Typ A und 0,06 Gramm pro Liter Eisenammonsulfat, im Reaktor vorgelegt. Dosierung 1 war eine 4,5 Gew.-%ige wässrige Lösung von Natriumpersulfat; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, mit einer Rate von 543 Gramm/h gestartet. 30 Minuten später wurde diese Rate reduziert und die verbleibende Menge an Dosierung 3 über einen Zeitraum von 150 Minuten vollständig mit konstanter Rate dosiert. Gleichzeitig mit Start der Dosierung 3 wurde Dosierung 4, bestehend aus 95 Gramm Wasser und 347 Gramm einer 20 Gew.-%igen wässrigen Lösung von Polyvinylalkohol Typ A, gestartet und die Gesamtmenge in 180 Minuten gleichmäßig dosiert. Die Dosierungen 1 und 2 wurden beendet nachdem jeweils 82,5 ml von Dosierung 1 und Dosierung 2 dem Reaktor zugefügt waren. Für die Viskositätsmessung nach Punkt 1.2 wurde Spindel 3 verwendet.

**Beispiel 16**

Es wurde wie für Beispiel 15 verfahren, aber die Dosierung 3, bestehend aus 814 Gramm Vinylacetat, wurde mit einer Rate von 135,8 Gramm/h gestartet; 30 Minuten später wurde diese Rate erhöht und die verbleibende Menge an Dosierung 3 über einen Zeitraum von 150 Minuten vollständig mit konstanter Rate dosiert. Gleichzeitig mit Start der Dosierung 3 wurde Dosierung 4, bestehend aus 95 Gramm Wasser und 347 Gramm einer 20 Gew.-%igen wässrigen Lösung von Polyvinylalkohol Typ A, gestartet und die Gesamtmenge in 180 Minuten gleichmäßig dosiert. Die Dosierungen 1 und 2 wurden beendet nachdem jeweils 78 ml von Dosierung 1 und Dosierung 2 dem Reaktor zugefügt waren. Für die Viskositätsmessung nach Punkt 1.2 wurde Spindel 3 verwendet.

**Beispiel 17**

Es wurden 366 Gramm einer wässrigen Mischung, enthaltend 36,2 Gramm pro Liter Wasser an Polyvinylalkohol Typ A und 0,06 Gramm pro Liter Eisenammonsulfat, im Reaktor vorgelegt. Bei Solltemperatur von 50 °C wurden die Dosierungen 1 und 2 mit einer Rate von 40 ml/h gestartet; diese Rate wurde nach Ablauf von 35 Minuten auf 18 ml/h reduziert. Dosierung 1 war eine 4,5 Gew.-%ige wässrige Lösung von Natriumpersulfat; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, gestartet und über einen Zeitraum von 180 Minuten vollständig mit konstanter Rate dosiert. Gleichzeitig mit Start der Dosierung 3 wurde Dosierung 4, bestehend aus 95 Gramm Wasser und 347 Gramm einer 20 Gew.-%igen wässrigen Lösung von Polyvinylalkohol Typ A, gestartet und die Gesamtmenge in 180 Minuten gleichmäßig dosiert. Die Dosierungen 1 und 2 wurden beendet nachdem jeweils 87,5 ml von Dosierung 1 und Dosierung 2 dem Reaktor zugefügt waren. Für die Viskositätsmessung nach Punkt 1.2 wurde Spindel 3 verwendet.

**Beispiel 18**

Es wurden 480 Gramm einer wässrigen Mischung, enthaltend 36,3 Gramm pro Liter Wasser an Polyvinylalkohol Typ A und 0,06 Gramm pro Liter Eisenammonsulfat, im Reaktor vorgelegt. Bei Solltemperatur von 50 °C wurden die Dosierungen 1 und 2 mit einer Rate von jeweils 20 ml/h gestartet; diese Rate im Weiteren nicht mehr verändert. Dosierung 1 war eine 4,5 Gew.-%ige wässrige Lösung von Natriumpersulfat; Dosierung 2 war eine 3,5 Gew.-%ige wässrige Lösung von Natriumisoascorbat. 5 Minuten nach Start der Dosierungen 1 und 2 wurde die Dosierung 3, bestehend aus 814 Gramm Vinylacetat, gestartet und über einen Zeitraum von 180 Minuten vollständig mit konstanter Rate dosiert. Gleichzeitig mit Start der Dosierung 3 wurde Dosierung 4, bestehend aus 329,5 Gramm einer 20 Gew.-%igen wässrigen Lösung von Polyvinylalkohol Typ A, gestartet und die Gesamtmenge in 180 Minuten gleichmäßig dosiert. Die Dosierungen 1 und 2 wurden beendet nachdem jeweils 86 ml von Dosierung 1 und Dosierung 2 dem Reaktor zugefügt waren.

Für die Viskositätsmessung nach Punkt 1.2 wurde Spindel 3 verwendet.

**Beispiel 19**

Es wurde wie für Beispiel 18 verfahren, aber es wurden 252 Gramm einer wässrigen Lösung, enthaltend 36,2 Gramm pro Liter Wasser an Polyvinylalkohol Typ A im Reaktor vorgelegt und Dosierung 4, bestand aus 197 Gramm Wasser und 347 Gramm einer 20 Gew.-%igen wässrigen Lösung von Polyvinylalkohol Typ A. Die Dosierungen 1 und 2 wurden beendet nachdem jeweils 82 ml von Dosierung 1 und Dosierung 2 dem Reaktor zugefügt waren.
Für die Viskositätsmessung nach Punkt 1.2 wurde Spindel 3 verwendet.

**Beispiel 20**

Es wurden 333 Gramm einer wässrigen Mischung, enthaltend 19,6 Gramm pro Liter Wasser an Polyvinylalkohol Typ A und 0,06 Gramm pro Liter Eisenammonsulfat, im Reaktor vorgelegt. Bei Solltemperatur von 70 °C wurden die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. Dosierung 3 bestand aus 814 Gramm Vinylacetat und Dosierung 4 bestand aus 236 Gramm Wasser und 189 Gramm einer 20 Gew.-%igen wässrigen Lösung von Polyvinylalkohol Typ A. Dosierung 2 wurde 25 Minuten nach Beendigung der Dosierungen 3 und 4 beendet. Dosierung 1 wurde 45 Minuten später beendet. Es wurden 69 ml an Dosierung 2 und 84 ml an Dosierung 1 verbraucht.
Für die Viskositätsmessung nach Punkt 1.2 wurde Spindel 3 verwendet.

**Beispiel 21**

Es wurde wie für Beispiel 20 verfahren, aber Dosierung 1 war eine 4,5 Gew.-%ige wässrige Lösung von Natriumpersulfat; Dosierung 2 war eine 3,5 Gew.-%ige wässrige Lösung von Natriumisoascorbat und Dosierung 4 bestand aus 240 Gramm Wasser und 189 Gramm einer 20 Gew.-%igen wässrigen Lösung von Polyvinylalkohol Typ A. Die Dosierungen 1 und 2 wurden beendet nachdem jeweils 71 ml von Dosierung 1 und Dosierung 2 dem Reaktor zugefügt waren.

**Beispiel 22**

Es wurden 302 Gramm einer wässrigen Mischung, enthaltend 10,0 Gramm pro Liter Wasser an Polyvinylalkohol Typ D und 0,06 Gramm pro Liter Eisenammonsulfat, im Reaktor vorgelegt. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. Die Dosierung 3 bestand aus 972 Gramm Vinylacetat. 5 Minuten nach Start von Dosierung 3 wurde Dosierung 4, bestehend aus 675 Gramm einer 10 Gew.-%igen wässrigen Lösung von Polyvinylalkohol Typ D, gestartet und die Gesamtmenge in 175 Minuten gleichmäßig dosiert. Die Dosierungen 1 und 2 wurden beendet nachdem jeweils 70 ml von Dosierung 1 und Dosierung 2 dem Reaktor zugefügt waren.

**Beispiel 23**

Es wurde wie für Beispiel 22 verfahren, aber in der wässrigen Mischung der Vorlage und für Dosierung 4 wurde Polyvinylalkohol Typ E verwendet und Dosierung 3 bestand aus 975 Gramm Vinylacetat. Die Dosierungen 1 und 2 wurden beendet nachdem jeweils 72 ml von Dosierung 1 und Dosierung 2 dem Reaktor zugefügt waren.
Für die Viskositätsmessung nach Punkt 1.2 wurde Spindel 3 verwendet.

**Beispiel 24**

Es wurden 308 Gramm einer wässrigen Mischung, eingestellt auf den pH-Wert von 4,8 und enthaltend 5,1 Gramm pro Liter Wasser an Polyvinylalkohol Typ G und 2.5 Gramm einer 20 Gew.-%igen wässrigen Weinsäurelösung, im Reaktor vorgelegt. Es wurde auf Solltemperatur von 83 °C temperiert und während des Aufheizens bei 55 °C die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. 5 Minuten nach Start der Dosierungen 1 und 2 wurde die Dosierung 3, bestehend aus 814 Gramm Vinylacetat, gestartet und über einen Zeitraum von 180 Minuten vollständig mit konstanter Rate dosiert. 5 Minuten nach Start der Dosierung 3 wurde Dosierung 4, bestehend aus 540 Gramm einer 11 Gew.-%igen wässrigen Lösung von Polyvinylalkohol Typ G, gestartet und die Gesamtmenge in 175 Minuten gleichmäßig dosiert. Dosierung 2 wurde 35 Minuten nach Ende der Dosierungen 3 und 4 beendet. Dosierung 1 wurde weitere 35 Minuten später beendet. Es wurden 75 ml an Dosierung 2 und 84.5 ml an Dosierung 1 verbraucht.

Für die Viskositätsmessung nach Punkt 1.2 wurde Spindel 3 verwendet. Die in diesem Beispiel hergestellte Dispersion wurde zu einem Holzleim formuliert. Dazu wurden in 100 Teilen Dispersion 2 Teile einer Emulsion, zusammengesetzt aus Propylencarbonat und 10 Gew.-%iger wässriger Lösung von Polyvinylalkohol Typ A, im Gewichtsverhältnis 2:1, eingerührt. Es wurde nach DIN EN 204/205 die Wasserfestigkeit des mittels der Formulierung hergestellten Eiche-Holzklebverbundes bestimmt. Die Wasserfestigkeit D3/3 wurde zu 3 $N/mm^2$ bestimmt. Damit kann mit Produkt nach Beispiel 24 ein wasserfester Holzleim hergestellt werden, der die Anforderungen an die Wasserfestigkeit der Beanspruchungsgruppe D3 erfüllt, ohne dafür ein Nachvernetzermonomer und/oder saure Katalysatoren einzusetzen.

**Beispiel 25**

Es wurden 308 Gramm einer wässrigen Mischung, eingestellt auf den pH-Wert von 4,8 und enthaltend 10 Gramm pro Liter Wasser an Polyvinylalkohol der Typen I/J/G/R im Gewichtsverhältnis 20/30/30/20, und 2.5 Gramm einer 20 Gew.-%igen wässrigen Weinsäurelösung, im Reaktor vorgelegt. Es wurde auf Solltemperatur von 83 °C temperiert und während des Aufheizens bei 55 °C die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. Dosierung 3 bestand aus 814 Gramm Vinylacetat und Dosierung 4, bestehend aus 540 Gramm einer 11 Gew.-%igen wässrigen Lösung von Polyvinylalkohol der Typen I/J/G/R im Gewichtsverhältnis 20/30/30/20, wurde 5 Minuten nach Dosierung 3 gestartet und die Gesamtmenge in 175 Minuten gleichmäßig dosiert. Dosierung 2 wurde 35 Minuten nach Ende der Dosierungen 3 und 4 beendet. Dosierung 1 wurde weitere 35 Minuten später beendet. Es wurden 75 ml an Dosierung 2 und 84.5 ml an Dosierung 1 verbraucht. Für die Viskositätsmessung nach Punkt 1.2 wurde Spindel 3 verwendet.

**Beispiel 26**

Es wurden 94,445 kg einer wässrigen Mischung, eingestellt auf den pH-Wert von 3,8 und enthaltend 32,9 Gramm pro Liter Wasser an Polyvinylalkohol Typ A und 0,06 Gramm pro Liter Eisenammonsulfat, im Reaktor vorgelegt, und bei einer Drehzahl von 200 UPM, die im gesamten Verlauf konstant war, 10 kg Ethylen aufgedrückt und auf Solltemperatur von 70 °C temperiert. Bei Solltemperatur wurden die Dosierungen 1 und 2 mit einer Rate von 20 kg/h gestartet; diese Rate wurde für 245 Minuten konstant gehalten. Dosierung 1 war eine 5,0 Gew.-%ige wässrige Lösung von t-Butylhydroperoxid; Dosierung 2 war eine 5,0 Gew.-%ige wässrige Lösung von Ascorbinsäure. 5 Minuten nach Start der Dosierungen 1 und 2 wurde die Dosierung 3, bestehend aus 244,4 kg Vinylacetat, gestartet und über einen Zeitraum von 240 Minuten vollständig mit konstanter Rate dosiert. Gleichzeitig mit Dosierung 3 wurde Dosierung 4, bestehend aus 64,76 kg Wasser und 129,52 kg einer 20 Gew.-%igen wässrigen Lösung von Polyvinylalkohol Typ A, gestartet und die Gesamtmenge in 240 Minuten gleichmäßig dosiert. Im Dosierzeitraum der Dosierungen 3 und 4 wurden bei konstantem Druck von 15 bar noch insgesamt 10 kg Ethylen zudosiert. Nach Ende der Dosierungen 3 und 4 wurden die Dosierraten der Dosierungen 1 und 2 erhöht und noch für einen Zeitraum von 55 Minuten zudosiert. Es wurden jeweils 75 kg an Dosierungen 1 und 2 verbraucht.

Es wurde auf einen pH-Wert von 5 eingestellt. Für die Viskositätsmessung nach Punkt 1.2 wurde Spindel 4 verwendet.

**Beispiel 27**

Es wurden 3,45 kg einer wässrigen Mischung, eingestellt auf den pH-Wert von 3,8 und enthaltend 54,1 Gramm pro Liter Wasser an Polyvinylalkohol Typ A und 0,06 Gramm pro Liter Eisenammonsulfat, im Reaktor vorgelegt und bei einer Drehzahl von 350 UPM, die im gesamten Verlauf konstant war, 175 Gramm Ethylen aufgedrückt und auf Solltemperatur von 70 °C temperiert. Bei Solltemperatur wurden die Dosierungen 1 und 2 mit einer Rate von 31,6 Gramm/h gestartet; diese Rate wurde im Weiteren konstant gehalten. Dosierung 1 war eine 5,0 Gew.-%ige wässrige Lösung von t-Butylhydroperoxid; Dosierung 2 war eine 5,0 Gew.-%ige wässrige Lösung von Ascorbinsäure. 5 Minuten nach Start der Dosierungen 1 und 2 wurde die Dosierung 3, bestehend aus 3,33 kg Vinylacetat und 3,33 kg Vinyllaurat, gestartet und über einen Zeitraum von 240 Minuten vollständig mit konstanter Rate dosiert. Gleichzeitig mit Dosierung 3 wurde Dosierung 4, bestehend aus 1,6 kg Wasser, 2,17 kg einer 20 Gew.-%igen wässrigen Lösung an Polyvinylalkohol Typ A und 1,0 kg einer 20 Gew.-%igen wässrigen Lösung an Polyvinylalkohol Typ F, gestartet und die Gesamtmenge in 240 Minuten gleichmäßig dosiert. Im Dosierzeitraum der Dosierungen 3 und 4 wurden bei einem Druck zwischen 8 und 10 bar noch insgesamt 160 Gramm Ethylen zudosiert. Die Dosierungen 1 und 2 wurden 335 Minuten nach deren Start beendet.

Es wurde auf einen pH-Wert von 5 eingestellt. Für die Viskositätsmessung nach Punkt 1.2 wurde Spindel 4 verwendet.

### Beispiel 28

Es wurden 334 Gramm einer wässrigen Mischung, enthaltend 19,5 Gramm pro Liter Wasser an Polyvinylalkohol Typ A und 0,06 Gramm pro Liter Eisenammonsulfat, im Reaktor vorgelegt. Dosierung 1 war eine 4,5 Gew.-%ige wässrige Lösung von Natriumpersulfat; Dosierung 2 war eine 3,5 Gew.-%ige wässrige Lösung von Natriumisoascorbat. 5 Minuten nach Start der Dosierungen 1 und 2 wurde die Dosierung 3, bestehend aus 136 Gramm Vinylacetat, gestartet und über einen Zeitraum von 30 Minuten vollständig mit konstanter Rate dosiert. Gleichzeitig mit Start von Dosierung 3 wurde Dosierung 4, bestehend aus 230 Gramm Wasser und 140 Gramm einer 20 Gew.-%igen wässrigen Lösung von Polyvinylalkohol Typ A, gestartet und die Gesamtmenge in 180 Minuten gleichmäßig dosiert. Sofort bei Ende von Dosierung 3 wurde eine Dosierung 3.1, bestehend aus 496 Gramm Vinylacetat und 83 Gramm Vinyllaurat, gestartet und über einen Zeitraum von 128 Minuten vollständig mit konstanter Rate dosiert. Sofort bei Ende von Dosierung 3.1 wurde eine Dosierung 3.2, bestehend aus 100 Gramm Vinylacetat, gestartet und über einen Zeitraum von 22 Minuten vollständig mit konstanter Rate dosiert. Die Dosierungen 1 und 2 wurden beendet nachdem jeweils 81 ml von Dosierung 1 und Dosierung 2 dem Reaktor zugefügt waren.

### Beispiel 29

Es wurden 302 Gramm einer wässrigen Mischung, enthaltend 10,0 Gramm pro Liter Wasser an Polyvinylalkohol Typ A und 0,06 Gramm pro Liter Eisenammonsulfat, im Reaktor vorgelegt. Dosierung 1 war eine 4,5 Gew.-%ige wässrige Lösung von Natriumpersulfat; Dosierung 2 war eine 3,5 Gew.-%ige wässrige Lösung von Natriumisoascorbat. 5 Minuten nach Start der Dosierungen 1 und 2 wurde die Dosierung 3, bestehend aus 181 Gramm Vinylacetat, gestartet und über einen Zeitraum von 40 Minuten vollständig mit konstanter Rate dosiert. 5 Minuten nach Start der Dosierung 3 wurde Dosierung 4, bestehend aus 132 Gramm Wasser und 392 Gramm einer 20 Gew.-%igen wässrigen Lösung von Polyvinylalkohol Typ A, gestartet und die Gesamtmenge in 175 Minuten gleichmäßig dosiert. Sofort bei Ende von Dosierung 3 wurde eine Dosierung 3.1, bestehend aus 470 Gramm Vinylacetat und 163 Gramm Butylacrylat, gestartet und über einen Zeitraum von 140 Minuten vollständig mit konstanter Rate dosiert. Die Dosierungen 1 und 2 wurden beendet nachdem jeweils 77 ml von Dosierung 1 und Dosierung 2 dem Reaktor zugefügt waren.

### Beispiel 30

Es wurden 308 Gramm einer wässrigen Mischung, eingestellt auf den pH-Wert von 4,8 und enthaltend 8,0 Gramm pro Liter Wasser an Polyvinylalkohol Typ G und 2.5 Gramm einer 20 Gew.-%igen wässrigen Weinsäurelösung, im Reaktor vorgelegt. Es wurde auf Solltemperatur von 83 °C temperiert und während des Aufheizens bei 55 °C die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. 5 Minuten nach Start der Dosierungen 1 und 2 wurde die Dosierung 3, bestehend aus 692 Gramm Vinylacetat und 122 Gramm VeoVa®9, gestartet und über einen Zeitraum von 180 Minuten vollständig mit konstanter Rate dosiert. 5 Minuten nach Start der Dosierung 3 wurde Dosierung 4, bestehend aus 645 Gramm einer 11 Gew.-%igen wässrigen Lösung von Polyvinylalkohol Typ G, gestartet und die Gesamtmenge in 175 Minuten gleichmäßig dosiert. Dosierung 2 wurde 35 Minuten nach Ende der Dosierungen 3 und 4 beendet. Dosierung 1 wurde weitere 30 Minuten später beendet. Es wurden 71 ml an Dosierung 2 und 80.5 ml an Dosierung 1 verbraucht. Für die Viskositätsmessung nach Punkt 1.2 wurde Spindel 3 verwendet.

### Beispiel 31

Es wurden 308 Gramm einer wässrigen Mischung, eingestellt auf den pH-Wert von 4,8 und enthaltend 8,0 Gramm pro Liter Wasser an Polyvinylalkohol Typ G und 2.5 Gramm einer 20 Gew.-%igen wässrigen Weinsäurelösung, im Reaktor vorgelegt. Es wurde auf Solltemperatur von 83 °C temperiert und während des Aufheizens bei 55 °C die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. 5 Minuten nach Start der Dosierungen 1 und 2 wurde die Dosierung 3, bestehend aus 692 Gramm Vinylacetat und 122 Gramm VeoVa®9, gestartet und über einen Zeitraum von 180 Minuten vollständig mit konstanter Rate dosiert. 5 Minuten nach Start der Dosierung 3 wurde Dosierung 4, bestehend aus 645 Gramm einer 11 Gew.-%igen wässrigen Lösung von Polyvinylalkohol Typ G und 13 Gramm einer 48 Gew.-%igen wässrigen Lösung an N-Methylolacrylamid, gestartet und die Gesamtmenge in 175 Minuten gleichmäßig dosiert. Dosierung 2 wurde 25 Minuten nach Ende der Dosierungen 3 und 4 beendet. Dosierung 1 wurde weitere 20 Minuten später beendet. Es wurden 71 ml an Dosierung 2 und 79 ml an Dosierung 1 verbraucht.
Für die Viskositätsmessung nach Punkt 1.2 wurde Spindel 4 verwendet.

**Beispiel 32**

Es wurden 308 Gramm einer wässrigen Mischung, eingestellt auf den pH-Wert von 5,5 und enthaltend 12,0 Gramm pro Liter Wasser an Polyvinylalkohol Typ G und 2.5 Gramm einer 20 Gew.-%igen wässrigen Weinsäurelösung, im Reaktor vorgelegt. Es wurde auf Solltemperatur von 83 °C temperiert und während des Aufheizens bei 55 °C die Dosierungen 1 und 2 mit einer Rate von 20 ml/h gestartet; diese Rate wurde im Weiteren nicht verändert. Dosierung 1 war eine 2,0 Gew.-%ige wässrige Lösung von Wasserstoffperoxid; Dosierung 2 war eine 3,5 Gew.-%ige wässrige Lösung von Weinsäure. 5 Minuten nach Start der Dosierungen 1 und 2 wurde die Dosierung 3, bestehend aus 181 Gramm Vinylacetat, gestartet und über einen Zeitraum von 40 Minuten vollständig mit konstanter Rate dosiert. 5 Minuten nach Start der Dosierung 3 wurde Dosierung 4, bestehend aus 150 Gramm einer 11 Gew.-%igen wässrigen Lösung von Polyvinylalkohol Typ G, gestartet und die Gesamtmenge in 40 Minuten gleichmäßig dosiert. Sofort bei Ende der Dosierung 3 wurde eine Dosierung 3.1, bestehend aus 511 Gramm Vinylacetat und 122 Gramm VeoVa®9, gestartet und über einen Zeitraum von 140 Minuten vollständig mit konstanter Rate dosiert, Gleichzeitig mit Start von Dosierung 3.1 wurde eine Dosierung 4.1, bestehend aus 494,6 Gramm einer 11 Gew.-%igen wässrigen Lösung von Polyvinylalkohol Typ G und 13 Gramm einer 48 Gew.-%igen wässrigen Lösung an N-Methylolacrylamid, gestartet und die Gesamtmenge in 140 Minuten gleichmäßig dosiert. Mit Beendigung der Dosierungen 3.1 und 4.1 wurde Dosierung 2 beendet. Dosierung 1 wurde weitere 37 Minuten später beendet. Es wurden 60 ml an Dosierung 2 und 70 ml an Dosierung 1 verbraucht. Für die Viskositätsmessung nach Punkt 1.2 wurde Spindel 4 verwendet. Die in diesem Beispiel hergestellte Dispersion wurde zu einem Holzleim formuliert. Dazu wurden in 100 Teilen Dispersion 3 Teile einer Emulsion, zusammengesetzt aus Propylencarbonat und 10 Gew.-%iger wässriger Lösung von Polyvinylalkohol Typ A, im Gewichtsverhältnis 2:1, sowie 5 Teile einer 50 Gew.-%igen wässrigen Lösung von Aluminiumchlorid eingerührt. Es wurde nach DIN EN 204/205 die Wasserfestigkeit des mittels der Formulierung hergestellten Eiche-Holzklebverbundes bestimmt. Die Wasserfestigkeit D3/3 wurde zu 6,3 N/mm$^2$ und die Wasserfestigkeit D4/5 wurde zu 4,1 N/mm$^2$ bestimmt. Damit kann mit Produkt nach Beispiel 32 ein wasserfester Holzleim hergestellt werden, der die Anforderungen an die Wasserfestigkeit der Beanspruchungsgruppe D4 erfüllt.

**6. Vergleichsbeispiele**

**Vergleichsbeispiel V1**

Es wurden 959 Gramm einer wässrigen Lösung, enthaltend 85,1 Gramm pro Liter Wasser an Polyvinylalkohol Typ B und 8,5 Gramm einer 20 Gew.-%igen wässrigen Weinsäure-Lösung, und 100 Gramm Vinylacetat im Reaktor vorgelegt. Während des Aufheizens auf 60 °C wurde bei °C die Dosierung 1 mit einer Rate von 20 ml/h gestartet. Dosierung 1 war eine 2,0 Gew.-%ige wässrige Lösung von Wasserstoffperoxid. Es wurde keine Dosierung 2 verwendet. Unmittelbar nachdem das infolge exothermer Reaktion auftretende Temperaturmaximum überschritten war, wurden die Solltemperatur auf 83 °C erhöht, die Rate der Dosierung 1 auf 10 ml/h reduziert und die Dosierung 3, bestehend aus 900 Gramm Vinylacetat, gestartet und in 150 Minuten vollständig mit konstanter Rate dosiert. Gleichzeitig mit Dosierung 3 wurde Dosierung 4, bestehend ausschließlich aus 100 Gramm Wasser, gestartet und die Gesamtmenge gleichmäßig über einen Zeitraum von 150 Minuten dosiert. Nach Beendigung der Dosierungen 3 und 4 wurde die Rate der Dosierung 1 schrittweise auf 50 ml/h erhöht. Dosierung 1 wurde beendet nachdem 75 ml dem Reaktor zugefügt waren. Anschließend wurde mit jeweils 10 Gew.-%igen Lösungen von t-Butylhydroperoxid und Natriumisoascorbat durch abwechselnde Zugabe von jeweils zweimal 1 Gramm nachpolymerisiert, wobei zwischen den Zugaben eine Wartezeit 2 bis 3 Minuten eingehalten wurde.
Der pH-Wert wurde nicht verändert. Für die Viskositätsmessung nach Punkt 1.2 wurde Spindel 5 verwendet.

**Vergleichsbeispiel V2**

Es wurden 1016 Gramm einer wässrigen auf den pH-Wert von 4,8 eingestellten Lösung, enthaltend 8,5 Gramm einer 20 Gew.-%igen wässrigen Weinsäure-Lösung und 85,1 Gramm pro Liter Wasser an Polyvinylalkoholen der Typen H und J (in genannter wässriger Lösung eingebracht als 300 Gramm einer 10 Gew.-%igen wässrigen Lösung vom Typ H und von 700 Gramm einer 10 Gew.-%igen wässrigen Lösung vom Typ J), und 100 Gramm Vinylacetat im Reaktor vorgelegt. Während des Aufheizens auf 60 °C wurde bei 50 °C die Dosierung 1 mit einer Rate von 20 ml/h gestartet. Dosierung 1 war eine 2,0 Gew.-%ige wässrige Lösung von Wasserstoffperoxid. Es wurde keine Dosierung 2 verwendet. Unmittelbar nachdem das infolge exothermer Reaktion auftretende Temperaturmaximum überschritten war, wurden die Solltemperatur auf 83 °C erhöht, die Rate der Dosierung 1 auf 10 ml/h reduziert und die Dosierung 3, bestehend aus 894 Gramm Vinylacetat, gestartet und in 150 Minuten vollständig mit konstanter Rate dosiert. Gleichzeitig mit Dosierung 3 wurde Dosierung 4, bestehend aus 83,4 Gramm Wasser und 16,6 Gramm einer 48 Gew.-%igen N-Methylolacrylamid-Lösung, gestartet und die Gesamtmenge gleichmäßig über einen Zeitraum von 150 Minuten dosiert. Nach Beendigung der Dosierungen 3 und 4 wurde die Rate der Dosierung 1 schrittweise auf 50 ml/h erhöht. Dosierung 1 wurde beendet nachdem 75 ml dem Reaktor zugefügt waren. Anschließend wurde mit jeweils 10 Gew.-%igen Lösungen von t-Butylhydroperoxid und Natriumisoascorbat durch abwechselnde Zugabe von jeweils zweimal 1 Gramm nachpolymerisiert, wobei zwischen den Zugaben eine Wartezeit 2 bis 3 Minuten eingehalten wurde.

Es wurde auf einen pH-Wert von 5.1 eingestellt. Für die Viskositätsmessung nach Punkt 1.2 wurde Spindel 5 verwendet.

**Vergleichsbeispiel V3**

Es wurden 851 Gramm einer wässrigen auf den pH-Wert von 4 eingestellten Lösung, enthaltend 0,8 Gramm Natriumacetat, 2,5 Gramm einer 20 Gew.-%igen wässrigen Weinsäure-Lösung und 94,5 Gramm pro Liter Wasser an Polyvinylalkohol der Type G, und 204 Gramm Vinylacetat im Reaktor vorgelegt. Während des Aufheizens auf 60 °C wurden bei 50 °C die Dosierungen 1 und 2 mit einer Rate von 15 ml/h gestartet. Dosierung 1 war eine 2,0 Gew.-%ige wässrige Lösung von Wasserstoffperoxid. Dosierung 2 war eine 3,5 Gew.-%ige wässrige Weinsäure-Lösung. Bei beginnendem Temperaturanstieg infolge exothermer Reaktion wurden die Raten der Dosierungen 1 und 2 reduziert um den Temperaturanstieg zu kontrollieren. Unmittelbar nachdem das auftretende Temperaturmaximum überschritten war, wurde die Solltemperatur auf 83 °C erhöht und die Dosierung 3, bestehend aus 488 Gramm Vinylacetat und 122 Gramm VeoVa®9, gestartet und in 180 Minuten vollständig mit konstanter Rate dosiert. Die Dosierraten der Dosierungen 1 und 2 wurden wieder auf 18 ml/h erhöht. 5 Minuten nach Start von Dosierung 3 wurde Dosierung 4, bestehend aus 100 Gramm Wasser und 13 Gramm einer 48 Gew.-%igen N-Methylolacrylamid-Lösung, gestartet und die Gesamtmenge gleichmäßig über einen Zeitraum von 175 Minuten dosiert. Nach Beendigung der Dosierungen 3 und 4 wurden die Raten der Dosierungen 1 und 2 schrittweise auf 50 ml/h erhöht. Beide Dosierungen wurden beendet nachdem jeweils 80 ml dem Reaktor zugefügt waren. Anschließend wurde mit jeweils 10 Gew.-%igen Lösungen von t-Butylhydroperoxid und Natriumisoascorbat durch abwechselnde Zugabe von jeweils zweimal 1 Gramm nachpolymerisiert, wobei zwischen den Zugaben eine Wartezeit von 2 bis 3 Minuten eingehalten wurde.

Es wurde auf einen pH-Wert von 5 eingestellt. Für die Viskositätsmessung nach Punkt 1.2 wurde Spindel 5 verwendet.

**Vergleichsbeispiel V4**

Es wurden 1016 Gramm einer wässrigen auf den pH-Wert von 4,8 eingestellten Lösung, enthaltend 8,5 Gramm einer 20 Gew.-%igen wässrigen Weinsäure-Lösung und 109,5 Gramm pro Liter Wasser an Polyvinylalkohol der Type E, und 100 Gramm Vinylacetat im Reaktor vorgelegt. Während des Aufheizens auf 60 °C wurde bei 50 °C die Dosierung 1 mit einer Rate von 20 ml/h gestartet. Dosierung 1 war eine 2,0 Gew.-%ige wässrige Lösung von Wasserstoffperoxid. Es wurde keine Dosierung 2 verwendet. Unmittelbar nachdem das infolge exothermer Reaktion auftretende Temperaturmaximum überschritten war, wurden die Solltemperatur auf 83 Grad erhöht, die Rate der Dosierung 1 auf 10 ml/h reduziert und die Dosierung 3, bestehend aus 894 Gramm Vinylacetat, gestartet und in 150 Minuten vollständig mit konstanter Rate dosiert. Gleichzeitig mit Start von Dosierung 3 wurde Dosierung 4, bestehend ausschließlich aus 100 Gramm Wasser, gestartet und die Gesamtmenge gleichmäßig über einen Zeitraum von 150 Minuten dosiert. Nach Beendigung der Dosierungen 3 und 4 wurde die Rate der Dosierung 1 schrittweise auf 50 ml/h erhöht. Dosierung 1 wurde beendet nachdem 75 ml dem Reaktor zugefügt waren. Anschließend wurde mit jeweils 10 Gew.-%igen Lösungen von t-Butylhydroperoxid und Natriumisoascorbat durch abwechselnde Zugabe von jeweils zweimal 1 Gramm nachpolymerisiert, wobei zwischen den Zugaben eine Wartezeit 2 bis 3 Minuten eingehalten wurde.

Es wurde auf einen pH-Wert von 5 eingestellt. Für die Viskositätsmessung nach Punkt 1.2 wurde Spindel 6 verwendet.

**Vergleichsbeispiel V5**

Es wurden 1016 Gramm einer wässrigen auf den pH-Wert von 4,8 eingestellten Lösung, enthaltend 8,5 Gramm einer 20 Gew.-%igen wässrigen Weinsäure-Lösung und 109,5 Gramm pro Liter Wasser an Polyvinylalkohol der Type D, und 100 Gramm Vinylacetat im Reaktor vorgelegt. Während des Aufheizens auf 60 °C wurde bei 50 °C die Dosierung 1 mit einer Rate von 20 ml/h gestartet. Dosierung 1 war eine 2,0 Gew.-%ige wässrige Lösung von Wasserstoffperoxid. Es wurde keine Dosierung 2 verwendet. Unmittelbar nachdem das infolge exothermer Reaktion auftretende Temperaturmaximum überschritten war, wurden die Solltemperatur auf 83 °C erhöht, die Rate der Dosierung 1 auf 10 ml/h reduziert und die Dosierung 3, bestehend aus 894 Gramm Vinylacetat, gestartet und in 150 Minuten vollständig mit konstanter Rate dosiert. Gleichzeitig mit Start von Dosierung 3 wurde Dosierung 4, bestehend aus 87,5 Gramm Wasser und 12,5 Gramm einer 48 Gew.-%igen N-Methylacrylamid-Lösung, gestartet und die Gesamtmenge gleichmäßig über einen Zeitraum von 150 Minuten dosiert. Nach Beendigung der Dosierungen 3 und 4 wurde die Rate der Dosierung 1 schrittweise auf 50 ml/h erhöht. Dosierung 1 wurd beendet nachdem 75 ml dem Reaktor zugefügt waren. Anschließend wurde mit jeweils 10 Gew.-%igen Lösungen von t-Butylhydroperoxid und Natriumisoascorbat durch abwechselnde Zugabe von jeweils zweimal 1 Gramm nachpolymerisiert, wobei zwischen den Zugaben eine Wartezeit 2 bis 3 Minuten eingehalten wurde.

Es wurde auf einen pH-Wert von 5 eingestellt. Für die Viskositätsmessung nach Punkt 1.2 wurde Spindel 6 verwendet.

**Vergleichsbeispiel V6**

Es wurden 334 Gramm einer wässrigen Lösung, enthaltend 19,5 Gramm pro Liter Wasser an Polyvinylalkohol der Type A, und 224 Gramm Vinylacetat im Reaktor vorgelegt. Bei Solltemperatur von 50 °C wurden die Dosierungen 1 und 2 mit einer Rate von 5 ml/h gestartet. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde Dosierung 3, bestehend aus 570 Gramm Vinylacetat gestartet und in 180 Minuten vollständig mit konstanter Rate dosiert. Gleichzeitig mit Start von Dosierung 3 wurde Dosierung 4, bestehend aus 95 Gramm Wasser und 379 Gramm einer 20 Gew.-%igen wässrigen Lösung von Polyvinylalkohol Typ A, gestartet und die Gesamtmenge gleichmäßig über einen Zeitraum von 180 Minuten dosiert. Nach Start der Dosierungen 3 und 4 wurden die Raten der Dosierungen 1 und 2 für einen Zeitraum von 60 Minuten so geregelt, dass die Innentemperatur einen Wert von 60 °C nicht überschritt. Anschließend wurden die Raten beider Dosierungen auf 20 ml/h eingestellt und blieben im weiteren Verlauf unverändert. Die Dosierungen 1 und 2 wurden beendet nachdem jeweils 57 ml von Dosierung 1 und Dosierung 2 dem Reaktor zugefügt waren.

Es wurde auf einen pH-Wert von 4,5 eingestellt. Für die Viskositätsmessung nach Punkt 1.2 wurde Spindel 2 verwendet.

**Vergleichsbeispiel V7**

Es wurden 300 Gramm einer wässrigen Lösung, enthaltend 0,06 Gramm pro Liter Eisenammonsulfat, im Reaktor vorgelegt und auf 80 °C aufgeheizt. Im Verlaufe des Aufheizens wurden bei 70 °C die Dosierungen 1 und 2 mit einer Rate von 20 ml/h gestartet; diese Rate wurde im Weiteren nicht verändert. Dosierung 1 war eine 2,55 Gew.-%ige wässrige Lösung von t-Butylhydroperoxid; Dosierung 2 war eine 4,35 Gew.-%ige wässrige Lösung von Natriumformaldehydsulfoxylat. 5 Minuten nach Start der Dosierungen 1 und 2 wurde die Dosierung 3, bestehend aus 407 Gramm Styrol und 407 Gramm Butylacrylat, gestartet und über einen Zeitraum von 180 Minuten vollständig mit konstanter Rate dosiert. 5 Minuten nach Start von Dosierung 3 wurde Dosierung 4, bestehend aus 100 Gramm Wasser, 244,5 Gramm einer 20 Gew.-%igen wässrigen Lösung von Polyvinylalkohol Typ A und 163 Gramm einer 20 Gew.-%igen wässrigen Lösung von Polyvinylalkohol Typ F, gestartet und die Gesamtmenge in 175 Minuten gleichmäßig dosiert. Nach Ende der Dosierungen 3 und 4 wurde die Temperatur auf 85 °C erhöht. Auch nach weiterer Zugabe der Dosierungen 1 und 2 über einen Zeitraum von deutlich über 2 Stunden konnte kein vollständiger Monomerumsatz erreicht werden. Die Dosierungen 1 und 2 wurden beendet nachdem jeweils 130 ml von Dosierung 1 und Dosierung 2 dem Reaktor zugefügt waren.

Es wurde keine pH-Wert Einstellung vorgenommen. Für die Viskositätsmessung nach Punkt 1.2 wurde Spindel 2 verwendet.

**8. Verwendungsbeispiel VWB**

Dieses Verwendungsbeispiel beschreibt den Einsatz erfindungsgemäßer Verfahrensprodukte in Verfahren der Emulsionspolymerisation zur Herstellung hochfeststoffhaltiger Dispersionen:

Es wurden 255 Gramm einer wässrigen Lösung, enthaltend 1 Gramm pro Liter Wasser an Polyvinylalkohol Typ A und 0,06 Gramm pro Liter Eisenammonsulfat, im Reaktor vorgelegt. Bei Solltemperatur von 50 °C wurden die Dosierungen 1 und 2 mit einer Rate von 20 ml/h gestartet und für einen Zeitraum von 125 Minuten dosiert. Dosierung 1 war eine 1,7 Gew.-%ige wässrige Lösung von t-Butylhydroperoxid; Dosierung 2 war eine 3,5 Gew.-%ige wässrige Lösung von Natriumisoascorbat. 5 Minuten nach Start der Dosierungen 1 und 2 wurde die Dosierung 3, bestehend aus 725 Gramm Vinylacetat, gestartet und die Gesamtmenge in 120 Minuten vollständig mit konstanter Rate dosiert. 5 Minuten nach Start von Dosierung 3 wurde Dosierung 4, bestehend aus 327,8 Gramm einer 20 Gew.-%igen wässrigen Lösung von Polyvinylalkohol Typ A und 34,5 Gramm einer 10 Gew.-%igen wässrigen Lösung von Polyvinylalkohol Typ D, gestartet und die Gesamtmenge gleichmäßig über einen Zeitraum von 115 Minuten dosiert. Es wurden jeweils 41 Gramm der Dosierungen 1 und 2 verbraucht.

Nach Beendigung der Dosierungen wurden 2972 Gramm der im Beispiel 2 hergestellten Dispersion, die zuvor mit 5 Gramm Vinylazetat versetzt und 2 Stunden bei Raumtemperatur gerührt worden war, in 10 Minuten gleichmäßig hinzugefügt.

Anschließend wurden Dosierungen 1.1 und 2.1 mit jeweils 18 ml/h gestartet; diese Raten wurden im Weiteren nicht verändert. Dosierung 1.1 war eine 4,5 Gew.-%ige wässrige Lösung von Natriumpersulfat. Dosierung 2.1 war eine 3,5 Gew.-%ige Lösung von Natriumisoascorbat, die in einer 2 Gew.-%igen Lösung von Natronlauge bereitet worden war. Gleichzeitig mit Starten der Dosierungen 1.1 und 2.1 wurde Dosierung 3.1, bestehend aus 780 Gramm Vinylacetat, gestartet und die Gesamtmenge in 120 Minuten vollständig mit konstanter Rate dosiert. Gleichzeitig mit dem Start der Dosierung 3.1 wurde die Dosierung 4.1, bestehend aus 60 Gramm einer 20 Gew.-%igen wässrigen Lösung von Polyvinylalkohol Typ A, gestartet und die Gesamtmenge gleichmäßig über einen Zeitraum von 120 Minuten dosiert.

Die Dosierungen 1.1 und 2.1 wurden beendet nachdem jeweils 45 ml von Dosierung 1.1 und Dosierung 2.1 dem Reaktor zugefügt waren.

Der pH-Wert wurde nicht eingestellt. Für die Viskositätsmessung nach Punkt 1.2 wurde Spindel 5 verwendet.

Die mittels Beckmann Coulter LS13320 erhaltene Partikelgrößenverteilung zeigte die für das Verwendungsbeispiel zur Herstellung hochfeststoffhaltiger Dispersionen mit Feststoffgehalten > 60 Gew.-% gewünschte bimodale Partikelgrößenverteilung, wobei ein geringer Anteil der kleineren Partikelfraktion von ≤ 25 Vol.-%, bevorzugt von ≤ 20 Vol.-% und insbesondre bevorzugt von ≤ 15 Vol.-%, bezogen auf das Gesamtvolumen aller Partikel gewünscht ist. Dementsprechend wurde eine für das Verwendungsbeispiel gewünschte hohe Polydispersität DP > 1.6 erhalten.

## 9. Ergebnisse

In den Tabellen 3 A und 3B werden wesentliche Ansatzcharakteristika betreffend z.B. den Einsatz des Schutzkolloids in der Vorlage und die Anfängliche Zugaberate (VZ), zusammengestellt. Tabelle 3A bezieht sich auf die Beispiele 1 bis 32; Tabelle 3B bezieht sich auf die Vergleichsbeispiele V1 bis V7 und das Verwendungsbeispiel VWB.

In den Tabellen 4A, für die Beispiele 1 bis 32, und 4B für die Vergleichsbeispiele V1 bis V7 und das Verwendungsbeispiel VWB, werden wesentliche Daten zur Charakterisierung der Dispersionen (Feststoffgehalt, pH-Wert, Viskosität Bf20, Koagulatanteil KOA und Siebrückstand SR) und der Partikel zusammen gefasst.

**Tabelle 3A:** Schutzkolloidcharakteristika für die Beispiele 1 bis 32

| 1 | 2 | 3 | 4 | 5 | 6 | 7 |
|---|---|---|---|---|---|---|
| Bsp Nr. | PVOH Typ | Gew.-% PVOH pro Mon | PVOH Konz (C) g/l H2O | Rate Dos4 g/h | Dos 4 cPVOH % | Rate (VZ) Gramm pro (min*l) |
| 1 | A | 10,0 | 85,1 | 350,0 | 1,7 | 0,35 |
| 2 | A | 10,0 | 54,6 | 205,6 | 9,9 | 1,19 |
| 3 | A | 10,1 | 36,2 | 147,3 | 15,7 | 1,09 |
| 4 | A | 10,1 | 36,2 | 147,3 | 15,7 | 1,09 |
| 5 | A | 10,1 | 36,2 | 147,3 | 15,7 | 1,09 |
| 6 | A | 10,1 | 19,5 | 158,0 | 16,0 | 1,29 |
| 7 | A | 10,1 | 19,5 | 158,0 | 16,0 | 1,29 |
| 8 | A | 10,1 | 10,2 | 163,3 | 16,1 | 1,39 |
| 9 | A | 10,1 | 0,0 | 334,6 | 16,2 | 3,00 |
| 10 | A | 10,0 | 5,0 | 179,7 | 15,3 | 1,53 |
| 11 | A | 10,1 | 0,0 | 245,4 | 16,2 | 2,20 |
| 12 | A | 6,6 | 0,0 | 211,9 | 16,2 | 1,90 |
| 13 | A | 10,1 | 0,0 | 147,7 | 16,2 | 1,32 |
| 14 | A | 10,0 | 1,0 | 116,0 | 15,5 | 1,00 |
| 15 | A | 10,1 | 36,2 | 147,3 | 15,7 | 1,09 |
| 16 | A | 10,1 | 36,2 | 147,3 | 15,7 | 1,09 |
| 17 | A | 10,1 | 36,2 | 147,3 | 15,7 | 1,09 |
| 18 | A | 10,2 | 36,3 | 109,9 | 20,0 | 0,79 |
| 19 | A | 9,6 | 36,2 | 181,3 | 12,8 | 1,59 |
| 20 | A | 5,4 | 19,6 | 141,7 | 8,9 | 0,64 |
| 21 | A | 5,4 | 19,6 | 143,0 | 8,8 | 0,64 |
| 22 | D | 7,3 | 10,0 | 231,4 | 10,0 | 1,29 |

(fortgesetzt)

| 1 | 2 | 3 | 4 | 5 | 6 | 7 |
|---|---|---|---|---|---|---|
| Bsp Nr. | PVOH Typ | Gew.-% PVOH pro Mon | PVOH Konz (C) g/l H2O | Rate Dos4 g/h | Dos 4 cPVOH % | Rate (VZ) Gramm pro (min*l) |
| 23 | E | 7,1 | 5,0 | 231,4 | 10,0 | 1,28 |
| 24 | G | 7,5 | 5,1 | 185,1 | 11,0 | 1,11 |
| 25 | I/J/G/R | 7,5 | 10,0 | 185,1 | 11,0 | 1,14 |
| 26 | A | 10,8 | 32,9 | 48.570 | 13,3 | 1,32 |
| 27 | A/F | 10,0 | 54,1 | 1.190 | 13,3 | 0,86 |
| 28 | A | 4,2 | 19,5 | 123,3 | 7,6 | 0,47 |
| 29 | A | 10,0 | 10,0 | 179,7 | 15,0 | 1,50 |
| 30 | G | 9,0 | 8,0 | 221,1 | 11,0 | 1,33 |
| 31 | G | 8,9 | 8,0 | 225,6 | 10,8 | 1,33 |
| 32 | G | 9,1 | 12,0 | 225,6 | 11,0 | 1,37 |

**Tabelle 3B: Schutzkolloidcharakteristika für die Vergleichsbeispiele V1 bis V7 und das Verwendungsbeispiel VWB**

| 1 | 2 | 3 | 4 | 5 | 6 | 7 |
|---|---|---|---|---|---|---|
| Bsp Nr. | PVOH Typ | % PVOH pro Mon | PVOH Konz (C) g/l H2O | Rate Dos4 g/h | Dos 4 cPVOH % | Rate (VZ) Gramm pro (min*l) |
| V1 | G | 7,5 | 85,1 | 0,0 | 0,0 | 0,00 |
| V2 | J/H | 10,0 | 109,3 | 0,0 | 0,0 | 0,00 |
| V3 | G | 8,9 | 94,5 | 0,0 | 0,0 | 0,00 |
| V4 | E | 10,1 | 109,5 | 0,0 | 0,0 | 0,00 |
| V5 | D | 10,0 | 109,5 | 0,0 | 0,0 | 0,00 |
| V6 | A | 10,1 | 19,5 | 158,0 | 16,0 | 1,29 |
| V7 | A/F | 10,0 | 0,0 | 174,0 | 16,1 | 1,55 |
| VWB | A/D | 5,8 | 1,0 | 198,0 | 19,0 | 2,36 |

Legende zu den Tabellen 3A und 3B:

Spalte 1: Nr. der Beispiele 1 bis 32; bzw. der Vergleichsbeispiele V1 bis V7; VWB steht für Verwendungsbeispiel, Spalte 2: jeweils verwendete Polyvinylalkohol Type (PVOH-Type) nach Tabelle 1, Spalte 3: Anteil Polyvinylalkohol (PVOH) in Gew.-% bezogen auf das Gesamtgewicht der Monomere (Mon), Spalte 4: Konzentration des Polyvinylalkohols (PVOH) im Wasser ($H_2O$) der Vorlage in Gramm pro Liter, Spalte 5: Dosierrate der Dosierung 4, enthaltend den zudosierten Polyvinylalkohol in Gramm pro Stunde, Spalte 6: Konzentration des Polyvinylalkohols (cPVOH) in der Dosierung 4 in Gew.-% bezogen auf das Gewicht an Wasser in der Dosierung 4, Spalte 6: Anfängliche Zugaberate (VZ) in Gramm Polyvinylalkohol pro Minute und Liter Wasser der Vorlage.

**Tabelle 4A: Dispersionscharakteristika für die Beispiele 1 bis 32**

| 1 | 2 | 3 | 4 | 5 | 6 | 7 | 8 | 9 | 10 |
|---|---|---|---|---|---|---|---|---|---|
| Bsp Nr. | FG exp % | pH | Bf20 mPas | KOA %/M | SR ppm | Dn nm | Dw nm | D3, 50 nm | PD |
| 1 | 31,2 | 4,5 | 56 | 0,05 | 82 | 113 | 125 | 123 | 1,11 |

(fortgesetzt)

| 1 | 2 | 3 | 4 | 5 | 6 | 7 | 8 | 9 | 10 |
|---|---|---|---|---|---|---|---|---|---|
| Bsp Nr. | FG exp % | pH | Bf20 mPas | KOA %/M | SR ppm | Dn nm | Dw nm | D3, 50 nm | PD |
| 2 | 45,6 | 5,2 | 1.350 | 0,08 | 226 | 157 | 177 | 171 | 1,13 |
| 3 | 50,1 | 4,5 | 2.655 | 0,06 | 98 | 206 | 231 | 228 | 1,12 |
| 4 | 50,2 | 4,9 | 1.323 | 0,05 | 507 | 294 | 321 | 317 | 1,09 |
| 5 | 50,7 | 5,1 | 847 | 0,05 | 372 | 336 | 365 | 360 | 1,09 |
| 6 | 50,0 | 4,9 | 497 | 0,02 | 97 | 382 | 409 | 404 | 1,07 |
| 7 | 50,4 | 5,1 | 427 | 0,01 | 56 | 428 | 459 | 454 | 1,07 |
| 8 | 50,6 | 5,1 | 311 | 0,02 | 35 | 509 | 565 | 555 | 1,11 |
| 9 | 50,3 | 4,5 | 241 | 0,01 | 46 | 620 | 698 | 655 | 1,13 |
| 10 | 50,7 | 5,3 | 263 | 0,06 | 67 | 739 | 805 | 787 | 1,09 |
| 11 | 50,4 | 5,1 | 206 | 0,01 | 33 | 826 | 868 | 861 | 1,05 |
| 12 | 60,4 | 4,9 | 3.750 | 0,01 | 178 | 1.000 | 1.095 | 1.081 | 1,10 |
| 13 | 50,6 | 4,9 | 176 | 0,02 | 51 | 1.184 | 1.300 | 1.293 | 1,10 |
| 14 | 50,4 | 5,2 | 171 | 0,06 | 86 | 1.381 | 1.510 | 1.495 | 1,09 |
| 15 | 50,0 | 4,5 | 1.675 | 0,06 | 177 | 260 | 287 | 283 | 1,10 |
| 16 | 50,4 | 4,5 | 1.510 | 0,06 | 56 | 283 | 308 | 304 | 1,09 |
| 17 | 50,0 | 4,5 | 1.275 | 0,02 | 32 | 288 | 313 | 309 | 1,09 |
| 18 | 49,0 | 4,5 | 1.450 | 0,06 | 69 | 265 | 292 | 288 | 1,10 |
| 19 | 50,2 | 4,5 | 1.100 | 0,06 | 66 | 306 | 331 | 327 | 1,08 |
| 20 | 48,3 | 4,5 | 336 | 0,06 | 617 | 357 | 382 | 378 | 1,07 |
| 21 | 49,3 | 4,5 | 812 | 0,06 | 141 | 322 | 344 | 339 | 1,07 |
| 22 | 50,1 | 5,0 | 920 | 0,05 | 97 | 555 | 614 | 585 | 1,11 |
| 23 | 50,2 | 4,8 | 2.540 | 0,05 | 105 | 764 | 833 | 815 | 1,09 |
| 24 | 47,7 | 4,5 | 1.315 | 0,10 | 502 | 1.057 | 1.217 | 1.198 | 1,15 |
| 25 | 47,5 | 4,6 | 1.150 | 0,18 | 730 | 948 | 1.039 | 1.025 | 1,10 |
| 26 | 52,0 | 5,0 | 3.100 | 0,04 | 473 | 278 | 328 | 317 | 1,18 |
| 27 | 50,2 | 4,5 | 9.200 | 0,08 | 622 | 123 | 160 | 156 | 1,30 |
| 28 | 48,6 | 4,5 | 458 | 0,06 | 481 | 335 | 358 | 355 | 1,07 |
| 29 | 49,7 | 4,5 | 469 | 0,01 | 62 | 387 | 413 | 408 | 1,07 |
| 30 | 46,0 | 4,5 | 1.720 | 0,04 | 223 | 952 | 1.230 | 1.144 | 1,29 |
| 31 | 46,0 | 4,5 | 3.250 | 0,03 | 128 | 935 | 1.268 | 1.162 | 1,36 |
| 32 | 46,8 | 4,5 | 3.500 | 0,15 | 427 | 920 | 1.149 | 1.085 | 1,25 |

**Tabelle 4B: Dispersionscharakteristika für die Vergleichsbeispiele V1 bis V7 und das Verwendungsbeispiel VWB**

| 1 | 2 | 3 | 4 | 5 | 6 | 7 | 8 | 9 | 10 |
|---|---|---|---|---|---|---|---|---|---|
| Bsp Nr. | FG exp % | pH | Bf20 mPas | KOA %/M | SR ges ppm | Dn nm | Dw nm | D3, 50 nm | PD |
| V1 | 50.2 | 4.9 | 4.000 | 0,02 | 853 | 530 | 1.262 | 1.063 | 2,38 |

(fortgesetzt)

| 1 | 2 | 3 | 4 | 5 | 6 | 7 | 8 | 9 | 10 |
|---|---|---|---|---|---|---|---|---|---|
| Bsp Nr. | FG exp % | pH | Bf20 mPas | KOA %/M | SR ges ppm | Dn nm | Dw nm | D3, 50 nm | PD |
| V2 | 51.2 | 5.1 | 11.500 | 0,02 | 191 | 443 | 840 | 733 | 1,90 |
| V3 | 46.0 | 5.0 | 13.140 | 0,04 | 1.056 | 271 | 2.741 | 2.675 | 10,11 |
| V4 | 50.4 | 5.0 | 31.500 | 0,05 | 211 | 332 | 1.480 | 1.101 | 4,46 |
| V5 | 50.9 | 5.3 | 18.400 | 0,05 | 74 | 317 | 1.724 | 1.336 | 5,44 |
| V6 | 51.8 | 5.1 | 872 | 0,52 | 283 | 386 | 486 | 414 | 1,26 |
| V7 | 47.7 | 5.7 | 829 | 0,10 | 5.623 | 296 | 550 | 371 | 1,86 |
| VWB | 64.6 | 5.2 | 6.650 | 0,16 | 717 | 457 | 1.028 | 1.036 | 2,25 |

Legende zu den Tabellen 4A und 4B:

Spalte 1: Nr. der Beispiele 1 bis 32; bzw. der Vergleichsbeispiele V1 bis V7; VWB steht für Verwendungsbeispiel, Spalte 2: Experimentell nach Abschnitt 1. 1 erhaltener Feststoffgehalt FG der Dispersion in Gew.-%

Spalte 3: pH-Wert der Dispersion, Spalte 4: Viskosität Bf20 in mPas nach Abschnitt 1.2, Spalte 5: Koagulatanteil in Gew.-%, bezogen auf Gesamtmonomer, nach Abschnitt 1.4, Spalte 6: Siebrückstand im ppm, bezogen auf das Gesamtgewicht der Dispersion, nach Abschnitt 1.4, Spalten 7, 8, 9: gewichtsmittlere Partikelgröße, Dw, zahlenmittlere Partikelgröße Dn, und Medianwert der Volumenverteilung des Partikeldurchmessers D3,50, nach Abschnitt 1.3 Spalte 10: Polydispersität PD.

## 10. Diskussion der Ergebnisse

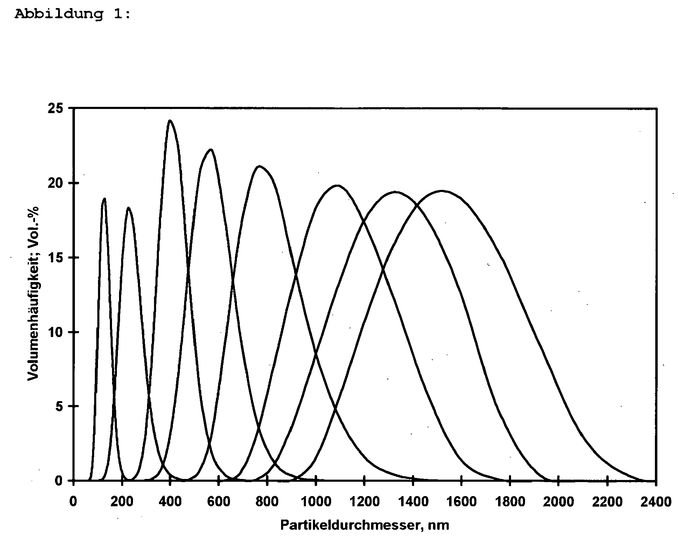

Die Beispiele 1 bis 14 demonstrieren, dass und wie durch Wahl der Konzentration (C) an Polyvinylalkohol im Wasser der Vorlage und gegegebenenfalls Wahl der anfänglichen Zugaberate VZ von Polyvinylalkohol pro Minute und Liter Wasser der Vorlage, insbesondere für Konzentrationen (C) = 0 g/l, Partikelgrößen Dw im Bereich zwischen 120 und 1.500 nm einstellbar sind. In Abbildung 1 wird dieser überraschende Befund veranschaulicht: Abbildung 1 ist eine Darstellung der Volumenhäufigkeitsverteilungen der Partikelgröße, erhalten mit den Beispielen 1, 3, 6, 8, 10, 12, 13 und 14; die Maxima der dargestellten Volumenhäufigkeitsverteilungen von links nach rechts entsprechen den aufsteigenden Nummern der Beispiele.

Für die Beispiele 1 bis 14 wurden unterschiedliche Oxidationsmittel eingesetzt, vergleiche in Tabelle 2A: deren dem Fachmann verständlicher Einfluss auf die erzielbaren Partikelgrößen, kann als zusätzliche Stellgröße benutzt werden, jedoch ist der dabei zu erzielende Effekt gering im Vergleich zum Einfluss der Konzentration an Schutzkolloid und der Zugaberate des Schutzkolloids.

Die jeweils eingestellten Feststoffgehalte FG sind der Tabelle 4A zu entnehmen. In Tabelle 4A ist auch die jeweils erzielte Polydispersität PD aufgeführt, die für die Beispiele 1 bis 14 überraschend niedrige Werte PD zwischen 1,05 und 1,03 annimmt.

Die Beispiele 15 bis 19 basieren auf Beispiel 4: Mit den Beispielen 15 bis 19 wird demonstriert, dass eine Variation der Dosierrate von Vinylester (Beispiele 15 und 16), der Dosierrate von Initiator (Beispiel 17) oder der Menge an wässriger Vorlage der Konzentration (C), innerhalb der bevorzugten Grenzen, allenfalls geringe Einflüsse auf die gewichtsmittlere Partikelgröße Dw ausgeübt werden, dass also die entscheidende Größen zur Regulierung der Partikelgrößen die Konzentration (C) und unterstützend die Anfängliche Zugaberate VZ sind.

Beispiele 20 basiert auf Beispiel 6 und demonstriert, dass eine Reduzierung des Anteils an Polyvinylalkohol bezogen auf Gesamtmonomer von 10,1 Gew.-% auf 5;4 Gew.-% und eine Erhöhung der Polymerisationstemperatur von 50 °C auf 70 °C allenfalls geringen Einfluss auf die gewichtsmittleren Partikelgrößen Dw hat, der zuvorderst auf den Wechsel des Reduktionsmittels zugeschrieben wird. Hierzu zeigt das Beispiel 21, das auf Beispiel 20 fußt, den nicht überraschenden Befund, dass unterschiedliche Redox-Kombinationen zu wenn auch vergleichsweise geringen Änderungen der Partikelgrößen Dw führen können.

Die Beispiele 22 bis 25 demonstrieren erfindungsgemäße Verfahren bei Einsatz von S-PVOH unterschiedlicher Molmasse, unterschiedlichen Hydrolysegrades sowie für X-PVOH. Dabei ergibt sich der für den Fachmann nicht überraschende Befund, dass Einsatz vollverseifter Polyvinylalkohole in den Beispielen 24 und 25 zur Verringerung der in einer Teilchenbildungsphase entstehenden Anzahl von Latexpartikeln führt, was höhere mittlere Partikelgrößen Dw im Endprodukt nach sich zieht. Davon unberührt bleibt die Möglichkeit der Regulierung der Partikelgrößen Dw durch die Konzentration (C) und die Anfängliche Zugaberate VZ.

Die Beispiele 26 und 27 demonstrieren erfindungsgemäße Verfahren zur Herstellung von Vinylacetat-Ethylen- und Vinylacetat-Vinyllaurat-Ethylen-Mischpolymeren.

Die Beispiele 28 und 29 demonstrieren erfindungsgemäße Verfahren zur Herstellung von Vinylacetat-Vinyllaurat- bzw. zur Herstellung von Vinylacetat-Acrylat-Mischpolymeren.

Die Beispiele 30 bis 31 demonstrieren erfindungsgemäße Verfahren zur Herstellung von Vinylacetat-Versaticsäurevinylester-Mischpolymerisaten, die auch vernetzbar ausgerüstet sein können, wie mit den Beispielen 31 und 32 demonstriert.

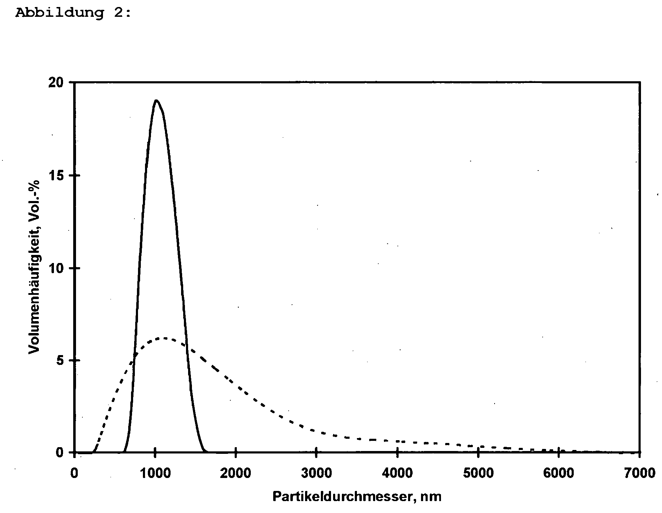

Vergleichsbeispiel V1 entspricht im Wesentlichen dem Beispiel 24, aber für V1 wurde die gesamte Menge an Polyvinylalkohol der Vorlage hinzugefügt und kein Polyvinylalkohol dosiert, was der üblichen Vorgehensweise im Stand der Technik entspricht und folglich zu einem hohen Wert für die Polydispersität PD < 1,6 führt. Zur Veranschaulichung werden in Abbildung 2 die Volumenhäufigkeitsverteilungen für das Beispiel 24 und das Vergleichsbeispiel V1 dargestellt: Bespiel 24 weist eine "enge Verteilung" mit einem Maximum bei 19 Vol.-% auf und ist durch eine Polydispersität PD = 1,15 gekennzeichnet während Vergleichsbeispiel V1 (als gestrichelte Kurve dargestellt) eine sehr "breite Verteilung" mit einem Maximum bei 6,2 Vol.-% zeigt und durch eine Polydispersität PD = 2,38 gekennzeichnet ist.

Die Vergleichsbeispiele V2 bis V5 demonstrieren bei Einsatz verschiedener Polyvinylalkohole, die jeweils insgesamt in die Vorlage eingebracht waren, also ohne Zudosierung von Polyvinylalkohol, die daraus resultierenden hohen Werte für die Polydispersität PD > 1,6. Das Vergleichsbeispiel V3 entspricht im Wesentlichen dem Beispiel 31, mit dem genannten wesentlichen Unterschied. Während für Beispiel 31 nach erfindungsgemäßen Verfahren eine Polydispersität PD = 1,36 erhalten wurde, wird für Vergleichsbeispiel eine sehr "breite Verteilung" mit einer Polydispersität PD = 10,1 erhalten. Ursächlich für diese gravierenden Unterschiede ist, dass in erfindungsgemäßen Verfahren Partikelaggregationsprozesse im Verlaufe der Polymerisation, nach Abschluss der Teilchenbildungsphase, minimiert, wenn nicht völlig unterdrückt, werden können, während nach dem Stand der Technik hergestellte Dispersionen gleicher Zusammensetzung wegen nicht unterbundener Partikelaggregationen zu sehr breiten Häufigkeitsverteilungen führen.

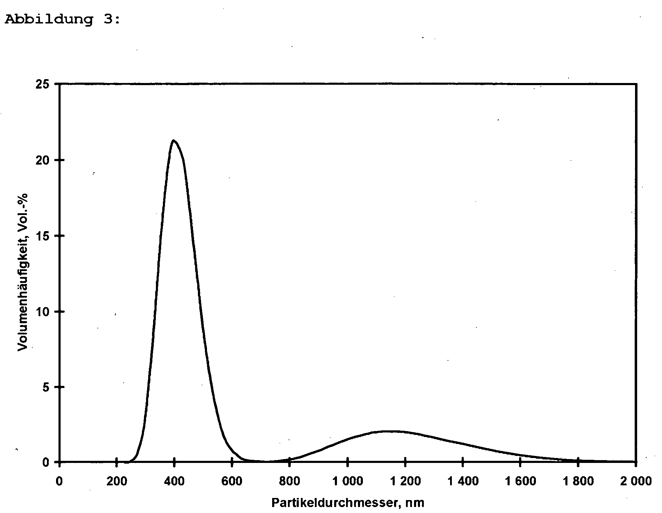

Mit Vergleichsbeispiel V6 wird demonstriert, dass bei Einsatz von Vinylester in der Vorlage eine Volumenhäufigkeitsverteilung mit einer zweiten groben Partikelfraktion entsteht. In Abbildung 3 wird dieser Sachverhalt veranschaulicht. Abbildung 3 ist eine Darstellung der Volumenhäufigkeitsverteilung für Vergleichsbeispiel V6, für das Hinzufügen von Vinylester zur Vorlage zur Bildung grober Partikelanteile mit einem rechtsseitigen zweiten Maximum führt; der Anteil an Partikeln in diesem Maximum beträgt 9,8 Vol.-%, was nicht mehr akzeptiert wird.

Für Vergleichsbeispiel V7 wurde kein Vinylester sondern eine Mischung von Styrol und Butylacrylat eingesetzt. Dieses Vergleichsbeispiel demonstriert, dass für andere Monomergemische als die in erfindungsgemäßen Verfahren eingesetzten Vinylester, zwar - mit Parametern, die den erfindungsgemäßen Verfahren entsprechen - auch feinteilige Polymerisate erzeugt werden können, jedoch wird die geforderte geringe Polydispersität PD > 1,6 nicht erfüllt und die Partikelgröße ist (wie aus weiteren hier nicht aufgeführten Versuchen deutlich wird) nicht wählbar im Bereich zwischen 120 nm und 1.500 nm einstellbar. Zudem zeigte sich, dass mit V7 kein vollständiger Umsatz der Monomere zu Polymer erreicht wurde.

Das Verwendungsbeispiel VWB demonstriert beispielhaft die Herstellung von Polymerdispersionen mit einem Feststoffgehalt FG > 60 Gew.-%, bezogen auf das Gesamtgewicht der Dispersion, wobei hier im Speziellen, nicht notwendiger Weise, die Polymerisation in einem ersten Schritt nach den erfindungsgemäßen Verfahren erfolgt, in einem Zwischenschritt im Polymerisationsablauf gewisse Anteile der im Beispiel 2 hergestellten Dispersion zugefügt wurden, und die Polymerisation danach fortgeführt wird.

Bekanntlich steigt die Viskosität Bf20 von Polymersdispersionen mit zunehmendem Feststoffgehalt FG exponentiell an. Das Verwendungsbeispiel demonstriert den Vorteil der Verwendung erfindungsgemäß hergestellter Dispersionen in Verfahren der radikalischen Emulsionspolymerisation zur Herstellung hochfeststoffhaltiger Dispersionen mit FG > 60 Gew.-%, die es erlaubt, solche Dispersionen herzustellen, ohne dass die Viskosität extrem hohe Werte, beispielsweise Bf20 > 30.000 mPas annimmt.

## Patentansprüche

1. Verfahren zur Herstellung von Schutzkolloid-stabilisierten wässrigen Dispersionen von Vinylesterpolymeren mit gewichtsmittleren Teilchendurchmessern Dw von 120 nm bis 1.500 nm und einer Polydispersität PD von < 1,6 mittels radikalisch initiierter Emulsionspolymerisationen von einem oder mehreren Vinylestern und gegebenenfalls einem oder mehreren weiteren ethylenisch ungesättigten Monomeren in wässrigem Medium in Gegenwart von einem oder mehreren Schutzkolloiden, **dadurch gekennzeichnet, dass** eine wässrige Mischung enthaltend 0 bis 90 Gramm an einem oder mehreren Schutzkolloiden pro Liter Wasser der Vorlage (Konzentration (C)) vorgelegt wird und

beginnend mit oder nach Start der Zudosierung von einem oder mehreren Initiatoren ein oder mehrere Schutzkolloide und die insgesamt eingesetzte Menge an Vinylestern zudosiert werden,
wobei die Emulsionspolymerisationen in Abwesenheit von Vinylhalogeniden durchgeführt werden und
während der Emulsionspolymerisationen keine Emulgatoren eingesetzt werden.

2.  Verfahren zur Herstellung von Schutzkolloid-stabilisierten wässrigen Dispersionen von Vinylesterpolymeren nach Anspruch 1, **dadurch gekennzeichnet, dass** eine wässrige Mischung enthaltend 0,1 bis 90 Gramm an einem oder mehreren Schutzkolloiden pro Liter Wasser der Vorlage (Konzentration (C)) vorgelegt wird.

3.  Verfahren zur Herstellung von Schutzkolloid-stabilisierten wässrigen Dispersionen von Vinylesterpolymeren nach Anspruch 1 oder 2, **dadurch gekennzeichnet, dass** für die Herstellung von Dispersionen mit folgenden gewichtsmittleren Partikelgrößen Dw folgende Konzentrationen (C) eingesetzt werden:

    (a) für gewichtsmittlere Partikelgrößen Dw von 120 bis 200 nm beträgt die Konzentration (C) zwischen 55 und 90 Gramm Schutzkolloid pro Liter Wasser der Vorlage;
    (b) für gewichtsmittlere Partikelgrößen Dw von größer 200 bis kleiner 500 nm beträgt die Konzentration (C) zwischen 55 und 15 Gramm Schutzkolloid pro Liter Wasser der Vorlage; und
    (c) für gewichtsmittlere Partikelgrößen Dw von $\geq$ 500 nm beträgt die Konzentration (C) zwischen 15 und 0,0 Gramm Schutzkolloid pro Liter Wasser der Vorlage.

4.  Verfahren zur Herstellung von Schutzkolloid-stabilisierten wässrigen Dispersionen von Vinylesterpolymeren nach Anspruch 1 bis 3, **dadurch gekennzeichnet, dass** die Zudosierung von einem oder mehreren Schutzkolloiden mit einer Zugaberate von 0,1 bis 5 Gramm Schutzkolloid pro Liter Wasser der Vorlage und Minute (Anfängliche Zugaberate (VZ)) erfolgt.

5.  Verfahren zur Herstellung von Schutzkolloid-stabilisierten wässrigen Dispersionen von Vinylesterpolymeren nach Anspruch 4, **dadurch gekennzeichnet, dass** für die Herstellung von Dispersionen mit folgenden gewichtsmittleren Partikelgrößen Dw folgende Anfängliche Zugaberate (VZ) eingesetzt werden:

    ($\alpha$) für gewichtsmittlere Partikelgrößen Dw von 120 bis 200 nm beträgt die Anfängliche Zugaberate (VZ) 0,1 bis 2 Gramm Schutzkolloid pro Liter Wasser der Vorlage und Minute;
    ($\beta$) für gewichtsmittlere Partikelgrößen Dw von größer 200 bis kleiner 500 nm beträgt die Anfängliche Zugaberate (VZ) 0,2 bis 3 Gramm Schutzkolloid pro Liter Wasser der Vorlage und Minute; und
    ($\gamma$) für gewichtsmittlere Partikelgrößen Dw von $\geq$ 500 nm beträgt die Anfängliche Zugaberate (VZ) 0,3 bis 5 Gramm Schutzkolloid pro Liter Wasser der Vorlage und Minute.

6.  Verfahren zur Herstellung von Schutzkolloid-stabilisierten wässrigen Dispersionen von Vinylesterpolymeren nach Anspruch 4 oder 5, **dadurch gekennzeichnet, dass** für die Herstellung von Dispersionen mit gewichtsmittleren Partikelgrößen Dw von 700 nm bis 1.500 nm Konzentrationen (C) zwischen 0,0 und 8 Gramm Schutzkolloid pro Liter Wasser der Vorlage und die Anfängliche Zugaberate (VZ) zwischen 0,3 und 3,0 Gramm Schutzkolloid pro Liter Wasser der Vorlage und Minute betragen.

7.  Verfahren zur Herstellung von Schutzkolloid-stabilisierten wässrigen Dispersionen von Vinylesterpolymeren nach Anspruch 1 bis 6, **dadurch gekennzeichnet, dass** mit der Zudosierung von einem oder mehreren Schutzkolloiden begonnen wird, wenn 0,0 bis 10 Gew.-% an einem oder mehreren Vinylestern, bezogen auf das Gesamtgewicht der insgesamt eingesetzten Vinylester, zudosiert sind.

8.  Schutzkolloid-stabilisierte Vinylesterpolymere in Form von Emulgator-freien wässrigen Dispersionen oder in Form von Emulgatorfreien Polymerpulvern erhältlich nach den Ansprüchen 1 bis 7.

9.  Verwendung der Verfahrensprodukte der Ansprüche 1 bis 7 in bzw. als Klebstoffe, als Binde- oder Beschichtungsmittel oder zur Behandlung textiler Flächengebilde.

10. Verwendung der Verfahrensprodukte der Ansprüche 1 bis 7 in bzw. als Klebstoffe für cellulosische Materialien, wie Papier, Pappe oder Holz, oder zur Behandlung textiler Flächengebilde bei der Herstellung von Teppichen.

11. Verwendung der Verfahrensprodukte der Ansprüche 1 bis 7 in Form von in Wasser redispergierbaren Polymerpulvern in bauchemischen Produkten, gegebenenfalls in Verbindung mit hydraulisch abbindenden Bindemitteln, wie Zement, Gips oder Wasserglas, für die Herstellung von Bauklebern, Putzen, Spachtelmassen, Verlaufsmassen, Dichtschlämmen, Fugenmörtel oder Farben oder zur Betonmodifizierung.

12. Verwendung der Verfahrensprodukte der Ansprüche 1 bis 7 in Verfahren der radikalisch initiierten Emulsionspolymerisation zur Herstellung von Polymerdispersionen mit Feststoffgehalten von > 60 Gew.-% und Polydispersitäten PD > 1,6.

**Claims**

1. Process for producing protective colloid-stabilized aqueous dispersions of vinyl ester polymers having weight-average particle diameters Dw of 120 nm to 1500 nm and a polydispersity PD of < 1.6
by means of free-radically initiated emulsion polymerizations of one or more vinyl esters and optionally one or more further ethylenically unsaturated monomers in an aqueous medium in the presence of one or more protective colloids, **characterized in that**
an aqueous mixture comprising 0 to 90 grams of one or more protective colloids per liter of water in the initial charge (concentration (C)) is initially charged and,
commencing with or after the start of metered addition of one or more initiators, one or more protective colloids and the total amount of vinyl esters used are metered in,
the emulsion polymerizations being performed in the absence of vinyl halides, and
no emulsifiers being used during the emulsion polymerizations.

2. Process for producing protective colloid-stabilized aqueous dispersions of vinyl ester polymers according to Claim 1, **characterized in that** an aqueous mixture comprising 0.1 to 90 grams of one or more protective colloids per liter of water in the initial charge (concentration (C)) is initially charged.

3. Process for producing protective colloid-stabilized aqueous dispersions of vinyl ester polymers according to Claim 1 or 2, **characterized in that** the following concentrations (C) are used for the production of dispersions having the following weight-average particle sizes Dw:

   (a) for weight-average particle sizes Dw of 120 to 200 nm the concentration (C) is between 55 and 90 grams of protective colloid per liter of water in the initial charge;
   (b) for weight-average particle sizes Dw of greater than 200 to less than 500 nm the concentration (C) is between 55 and 15 grams of protective colloid per liter of water in the initial charge; and
   (c) for weight-average particle sizes Dw of ≥ 500 nm the concentration (C) is between 15 and 0.0 grams of protective colloid per liter of water in the initial charge.

4. Process for producing protective colloid-stabilized aqueous dispersions of vinyl ester polymers according to Claim 1 to 3, **characterized in that** the metered addition of one or more protective colloids is effected at an addition rate of 0.1 to 5 grams of protective colloid per liter of water in the initial charge and minute (initial addition rate (VZ)).

5. Process for producing protective colloid-stabilized aqueous dispersions of vinyl ester polymers according to Claim 4, **characterized in that** the following initial addition rates (VZ) are used for the production of dispersions having the following weight-average particle sizes Dw:

   (α) for weight-average particle sizes Dw of 120 to 200 nm the initial addition rate (VZ) is 0.1 to 2 grams of protective colloid per liter of water in the initial charge and minute;
   (β) for weight-average particle sizes Dw of greater than 200 to less than 500 nm the initial addition rate (VZ) is 0.2 to 3 grams of protective colloid per liter of water in the initial charge and minute; and
   (γ) for weight-average particle sizes Dw of ≥ 500 nm the initial addition rate (VZ) is 0.3 to 5 grams of protective colloid per liter of water in the initial charge and minute.

6. Process for producing protective colloid-stabilized aqueous dispersions of vinyl ester polymers according to Claim 4 or 5, **characterized in that** concentrations (C) are between 0.0 and 8 grams of protective colloid per liter of water in the initial charge and the initial addition rate (VZ) is between 0.3 and 3.0 grams of protective colloid per liter of water in the initial charge and minute for the production of dispersions having weight-average particle sizes Dw of 700 nm to 1500 nm.

7. Process for producing protective colloid-stabilized aqueous dispersions of vinyl ester polymers according to Claim 1 to 6, **characterized in that** the metered addition of one or more protective colloids is commenced when 0.0% to 10% by weight of one or more vinyl esters, based on the total weight of the total amount of vinyl esters used, has been metered in.

8. Protective colloid-stabilized vinyl ester polymers in the form of emulsifier-free aqueous dispersions or in the form of emulsifier-free polymer powders obtainable according to Claims 1 to 7.

9. Use of the process products of Claims 1 to 7 in or as adhesives, as a binder or coating material or for treatment of textile fabrics.

10. Use of the process products of Claims 1 to 7 in or as adhesives for cellulosic materials such as paper, paperboard or wood, or for treatment of textile fabrics in the production of carpets.

11. Use of the process products of Claims 1 to 7 in the form of water-redispersible polymer powders in construction chemical products, optionally in conjunction with hydraulically setting binders such as cement, gypsum or waterglass, for the production of construction adhesives, renders, spackling compounds, levelling compounds, sealing compounds, grouts or paints, or for concrete modification.

12. Use of the process products of Claims 1 to 7 in processes for free-radically initiated emulsion polymerization for production of polymer dispersions having solids contents of > 60% by weight and polydispersities PD of > 1.6.


**Revendications**

1. Procédé de fabrication de dispersions aqueuses stabilisées par des colloïdes protecteurs de polymères d'esters de vinyle de diamètres de particule moyens en poids Dw de 120 nm à 1 500 nm et d'une polydispersité PD < 1,6, par polymérisations en émulsion initiées radicalairement d'un ou de plusieurs esters de vinyle et éventuellement d'un ou de plusieurs autres monomères éthyléniquement insaturés dans un milieu aqueux en présence d'un ou de plusieurs colloïdes protecteurs, **caractérisé en ce que**
un mélange aqueux contenant 0 à 90 grammes d'un ou de plusieurs colloïdes protecteurs par litre d'eau de la préparation (concentration (C)) est chargé et
en commençant avec ou après le début de l'ajout d'un ou de plusieurs initiateurs, un ou plusieurs colloïdes protecteurs et la quantité utilisée au total d'esters de vinyle sont ajoutés,
les polymérisations en émulsion étant réalisées en l'absence d'halogénures de vinyle, et
aucun émulsifiant n'étant utilisé pendant les polymérisations en émulsion.

2. Procédé de fabrication de dispersions aqueuses stabilisées par des colloïdes protecteurs de polymères d'esters de vinyle selon la revendication 1, **caractérisé en ce qu'**un mélange aqueux contenant 0,1 à 90 grammes d'un ou de plusieurs colloïdes protecteurs par litre d'eau de la préparation (concentration (C), est chargé.

3. Procédé de fabrication de dispersions aqueuses stabilisées par des colloïdes protecteurs de polymères d'esters de vinyle selon la revendication 1 ou 2, **caractérisé en ce que** les concentrations (C) suivantes sont utilisées pour la fabrication de dispersions ayant les tailles de particules moyennes en poids Dw suivantes :

   (a) pour des tailles de particules moyennes en poids Dw de 120 à 200 nm, la concentration (C) est comprise entre 55 et 90 grammes de colloïde protecteur par litre d'eau de la préparation ;
   (b) pour des tailles de particules moyennes en poids Dw de plus de 200 à moins de 500 nm, la concentration (C) est comprise entre 55 et 15 grammes de colloïde protecteur par litre d'eau de la préparation ; et
   (c) pour des tailles de particules moyennes en poids Dw $\geq$ 500 nm, la concentration (C) est comprise entre 15 et 0,0 gramme de colloïde protecteur par litre d'eau de la préparation.

4. Procédé de fabrication de dispersions aqueuses stabilisées par des colloïdes protecteurs de polymères d'esters de vinyle selon les revendications 1 à 3, **caractérisé en ce que** l'ajout d'un ou de plusieurs colloïdes protecteurs a lieu à un taux d'ajout de 0,1 à 5 grammes de colloïde protecteur par litre d'eau de la préparation et par minute (taux d'ajout initial (VZ)).

5. Procédé de fabrication de dispersions aqueuses stabilisées par des colloïdes protecteurs de polymères d'esters de vinyle selon la revendication 4, **caractérisé en ce que** les taux d'ajout initiaux (VZ) suivants sont utilisés pour la fabrication de dispersions ayant les tailles de particules moyennes en poids Dw suivantes :

(α) pour des tailles de particules moyennes en poids Dw de 120 à 200 nm, le taux d'ajout initial (VZ) est de 0,1 à 2 grammes de colloïde protecteur par litre d'eau de la préparation et par minute ;
(β) pour des tailles de particules moyennes en poids Dw de plus de 200 à moins de 500 nm, le taux d'ajout initial (VZ) est de 0,2 à 3 grammes de colloïde protecteur par litre d'eau de la préparation et par minute ; et
(γ) pour des tailles de particules moyennes en poids Dw ≥ 500 nm, le taux d'ajout initial (VZ) est de 0,3 à 5 grammes de colloïde protecteur par litre d'eau de la préparation et par minute.

6. Procédé de fabrication de dispersions aqueuses stabilisées par des colloïdes protecteurs de polymères d'esters de vinyle selon la revendication 4 ou 5, **caractérisé en ce que**, pour la fabrication de dispersions ayant des tailles de particules moyennes en poids Dw de 700 nm à 1 500 nm, les concentrations (C) sont comprises entre 0,0 et 8 grammes de colloïde protecteur par litre d'eau de la préparation et le taux d'ajout initial (VZ) est compris entre 0,3 et 3,0 grammes de colloïde protecteur par litre d'eau de la préparation et par minute.

7. Procédé de fabrication de dispersions aqueuses stabilisées par des colloïdes protecteurs de polymères d'esters de vinyle selon les revendications 1 à 6, **caractérisé en ce que** l'ajout d'un ou de plusieurs colloïdes protecteurs est débuté lorsque 0,0 à 10 % en poids d'un ou de plusieurs esters de vinyle, par rapport au poids total des esters de vinyle utilisés au total, sont ajoutés.

8. Polymères d'esters de vinyle stabilisés par des colloïdes protecteurs sous la forme de dispersions aqueuses sans émulsifiants ou sous la forme de poudres polymères sans émulsifiants pouvant être obtenus selon les revendications 1 à 7.

9. Utilisation des produits du procédé selon les revendications 1 à 7 dans ou en tant qu'adhésifs, en tant que liant ou agent de revêtement ou pour le traitement de structures textiles plates.

10. Utilisation des produits du procédé selon les revendications 1 à 7 dans ou en tant qu'adhésifs pour matériaux cellulosiques, tels que le papier, le carton ou le bois, ou pour le traitement de structures textiles plates lors de la fabrication de tapis.

11. Utilisation des produits du procédé selon les revendications 1 à 7 sous la forme de poudres polymères redispersibles dans l'eau dans des produits chimiques pour le bâtiment, éventuellement conjointement avec des liants hydrauliques, tels que le ciment, le gypse ou le verre soluble, pour la fabrication de colles pour le bâtiment, de crépis, d'enduits, de matières d'étalement, de boues d'étanchéité, de mortiers de jointoyage ou de peintures ou pour la modification de béton.

12. Utilisation des produits du procédé selon les revendications 1 à 7 dans des procédés de polymérisation en émulsion initiée radicalairement pour la fabrication de dispersions polymères ayant des teneurs en solides > 60 % en poids et des polydispersités PD > 1,6.

Abbildung 1:

Abbildung 2:

Abbildung 3:

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 1595402
- GB 857514 A
- DE 102009008143
- DE 102006037317
- DE 1260145
- DE 1029565
- DE 10337183
- DE 10035589
- EP 1215219 A
- DE 19962566

- EP 1420033 A
- EP 1262465 A
- EP 1788001 A
- DE 3227090
- EP 0224169 A
- DE 2837992
- US 5679735 A
- EP 0789035 A
- DE 3036696
- DE 3147008

### In der Beschreibung aufgeführte Nicht-Patentliteratur

- **FIKENTSCHER.** *Cellulosechemie,* 1932, vol. 13, 58